## Europäisches Patentamt
## European Patent Office
## Office européen des brevets

(19)

(11) Numéro de publication : **0 111 792 B1**

(12) **FASCICULE DE BREVET EUROPÉEN**

(45) Date de publication du fascicule du brevet :
29.07.87

(51) Int. Cl.⁴ : **H 04 Q 11/04**

(21) Numéro de dépôt : **83112070.4**

(22) Date de dépôt : **01.12.83**

(54) **Dispositif de traitement de signalisation voie par voie pour autocommutateur temporel.**

(30) Priorité : 06.12.82 FR 8220407

(43) Date de publication de la demande :
27.06.84 Bulletin 84/26

(45) Mention de la délivrance du brevet :
29.07.87 Bulletin 87/31

(84) Etats contractants désignés :
**AT BE CH DE FR GB IT LI LU NL SE**

(56) Documents cités :
**EP-A- 0 018 911**
**EP-A- 0 062 296**
**L'ONDE ELECTRIQUE, vol. 62, no. 11, novembre 1982, pages 62-66, Paris, FR. J.B. JACOB et al.: "Le système E 10.B à l'ère de la télématique"**
**COLLOQUE INTERNATIONAL DE COMMUTATION, session 23B, paper 2, 21-25 septembre 1981, pages 1-8, Montreal, CA. F. BEHAGUE et al.: "CCITT no. 7, Common channel signaling and the E10 and E12 digital switching systems"**
**COLLOQUE INTERNATIONAL DE COMMUTATION, session 14A, paper 1, 21-25 septembre 1971, pages 1-9, Montreal, CA. M. BALLARD et al.: "The E10.S-TSS.5: A multipurpose digital switching system"**
**COMMUTATION ET TRANSMISSION, no. 2, juillet 1980, pages 77-96, Paris, FR. J.B. JACOB et al.: "La nouvelle gamme de centraux temporels de CIT-ALCATEL système E10B"**

(73) Titulaire : **ALCATEL CIT**
**33, rue Emeriau**
**F-75015 Paris (FR)**

(72) Inventeur : **Favrel, Jean-Paul**
**Collège "Bons Raisins" rue Victor Duruy**
**F-92500 Rueil Malmaison (FR)**
Inventeur : **Ouss, Jean**
**5, Sentier de la Pointe**
**F-92190 Meudon (FR)**
Inventeur : **Pocheau, Jean-Marc**
**9, rue C. Guy**
**F-94200 Ivry sur Seine (FR)**

(74) Mandataire : **Weinmiller, Jürgen et al**
**Lennéstrasse 9 Postfach 24**
**D-8133 Feldafing (DE)**

**0 111 792**

## Description

L'invention concerne un dispositif de traitement de la signalisation voie par voie dans un autocommutateur temporel. Elle est applicable en particulier dans un central téléphonique comportant des lignes numériques exploitées en mode appel par appel et des lignes numériques exploitées en mode réservé.

Dans un tel central, il est habituel de relier une ligne ou un circuit d'entrée à une ligne ou un circuit de sortie au moyen du réseau de connexion, la signalisation étant reçue et émise sous le contrôle des organes de commande du central. Dans le cas de lignes réservées on ne peut pas, comme dans les anciens systèmes analogiques, relier directement la ligne entrante à la ligne sortante d'une manière permanente pendant la durée de location de la ligne. On établit donc des connexions semi-permanentes dans le réseau de connexion pour les lignes réservées, et la signalisation reçue de la même manière que pour les lignes exploitées en appel par appel, est réémise en sortie de réseau de connexion de façon à ce que le central soit transparent pour les lignes réservées, et que le loueur ait une liberté totale d'utilisation de la voie de signalisation qui lui est attribuée.

Cette procédure présente des inconvénients du fait que la gestion de la signalisation des lignes louées mobilise une partie de la puissance de commande, et d'autre part du fait que la transparence complète est contraignante. En conséquence, le but de l'invention est de réaliser un dispositif réalisant un traitement de la signalisation des voies en appel par appel, et un simple aiguillage de la signalisation pour les lignes réservées, dans un autocommutateur comportant notamment des unités de commande à microprocesseur, des unités de terminaux à microprocesseur et un réseau de connexion, tel que l'autocommutateur évoqué dans la demande de brevet français 2 503 513 de la demanderesse. Dans cet autocommutateur les unités de commande et de terminaux sont reliées au réseau de connexion par des liaisons multiplex bidirectionnelles assurant la mise en communication des unités de terminaux d'une part entre elles, pour l'établissement des communications, d'autre part avec les unités de commande qui les pilotent ; les unités de terminaux comprennent des unités de terminaux de circuits numériques qui permettent de desservir les jonctions temporelles MIC.

Selon une caractéristique de l'invention l'autocommutateur temporel comporte des moyens pour la desserte des voies téléphoniques tant en mode appel par appel qu'en mode réservé, comprenant :

au moins une unité terminale de brassage (UTB) recevant les voies de signalisation associées aux voies de communication réservées qui proviennent des jonctions temporelles (MIC) et assurant le brassage de ces voies de signalisation de leur réémission vers les jonctions temporelles MIC destinataires via le réseau de connexion (RCX),

des unités de terminaux (UTI) de circuits numériques (CN) comportant chacune, dans chaque circuit numérique (CN), un terminal numérique (TN) qui assure le transcodage et la resynchronisation de trame pour le circuit numérique (CN), un circuit de réception de signalisation (SIG) pour la signalisation voie par voie issue de la jonction temporelle MIC desservie par le circuit numérique (CN), ainsi qu'un circuit de synchronisation et de signalisation (SES) pour le contrôle parallèle des synchronisations de multitrames émanant de l'unité terminale de brassage ou de la jonction temporelle MIC desservie par le circuit numérique (CN) et pour l'émission des signalisations relatives aux voies transmises, via l'unité de brassage (UTB), vers la jonction temporelle MIC desservie par le circuit numérique.

La présente invention, ses caractéristiques et ses avantages sont précisés dans la description suivante en relation avec les figures ci-dessous référencées :

La figure 1 présente un schéma d'un autocommutateur comportant l'invention.

La figure 2 présente une unité de terminaux adaptée pour la mise en œuvre de l'invention.

La figure 3 présente une unité de brassage.

Les figures 4A, 4B présentent un terminal numérique.

Les figures 5A, 5B présentent un circuit de synchronisation et de signalisation.

La figure 6 présente un circuit de réception de signalisation.

Les figures 7A, 7B présentent un brasseur.

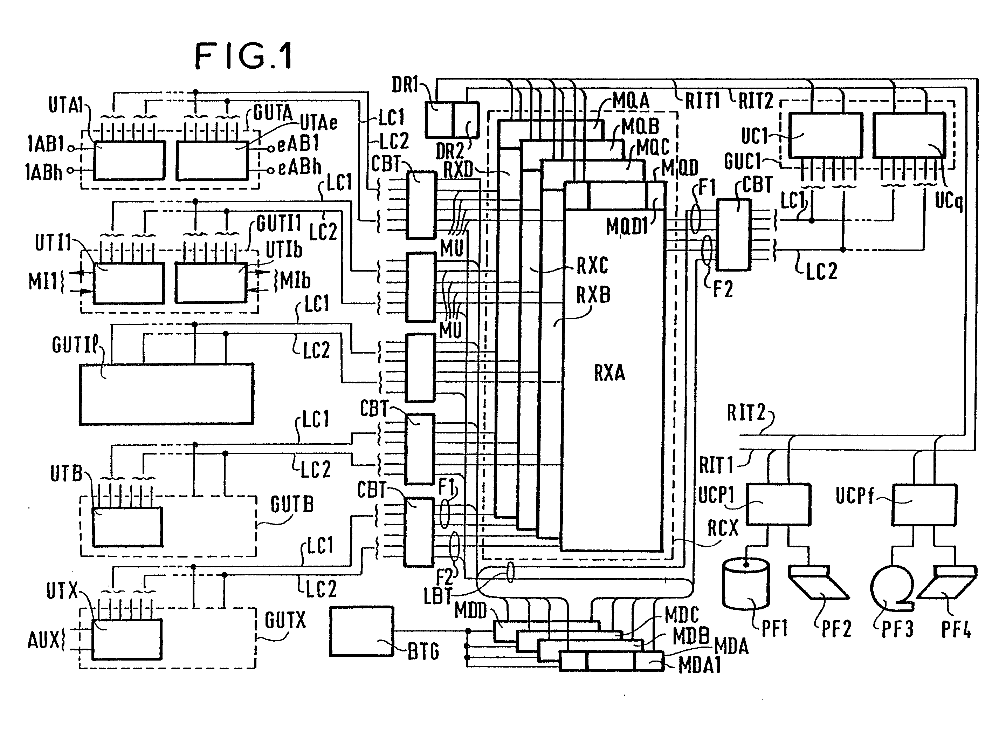

L'autocommutateur temporel présenté à la figure 1 comporte un réseau de connexion temporel RCX, des unités de commande à microprocesseur UC, UCP et des unités de terminaux UT.

Le réseau de commutation temporel RCX est préférablement du type de celui décrit dans la demande de brevet français n° 2 503 514 de la demanderesse, il comporte des plans de commutation indépendants référencés RXA à RXD qui comportent chacun plusieurs commutateurs temporels pilotés chacun par un marqueur MQ, tel MQD1, les marqueurs MQ d'un plan étant globalement référencés MQA, MQB, MQC ou MQD sur la figure 1.

Le système de commande de l'autocommutateur est préférablement du type décrit dans la demande de brevet français n° 2 503 513 de la demanderesse, il est formé d'unités de commande UC banalisées, ici regroupées en groupes GUC de q unités dont un seul GUC1 a été figuré ici, ainsi que d'unités de commande de périphériques UCP, ici au nombre de f.

Chaque unité de commande UC comporte essentiellement un microprocesseur relié par des liaisons bus à des mémoires et à des interfaces spécialisées de liaison. Les unités de commande de périphériques UCP ont pratiquement la même structure que les unités de commande UC banalisées, elles s'en

2

différencient notamment par le fait qu'elles comportent des coupleurs spécialisés, ici non représentés, pour des périphériques spécifiques, tels des coupleurs pour un disque PF1 et un terminal de dialogue PF2 dans le cas de l'unité de commande de périphérique UCP1 et des coupleurs dans un dérouleur de bande magnétique PF3 et pour un terminal d'opérateur PF4 pour l'unité de commande de périphérique UCPf.

Un réseau RIT de liaisons point à point dupliquées RIT1, RIT2, gérées par des distributeurs dupliqués DR1, DR2 relie les unités de commande UC, les unités de commande de périphériques UCP et les marqueurs MQ pour leurs échanges d'information.

Une base de temps générale BTG fournit les signaux d'horloge et de synchronisation nécessaires au fonctionnement de l'autocommutateur, elle est par exemple du type décrit dans la demande de brevet français n° 2 390 856 et comporte alors trois oscillateurs non représentés qui fournissent les signaux d'horloge et de synchronisation sous forme de trois couples de deux signaux l'un d'horloge l'autre de synchronisation.

La base de temps générale BTG alimente les unités de commande UC et les unités de terminaux UT en signaux d'horloge et de synchronisation par l'intermédiaire de modules de distribution MD et de circuits d'horloge et de synchronisation CBT.

Les modules de distribution MD sont indépendants les uns des autres, ils se répartissent la distribution des signaux d'horloge et de synchronisation aux unités de commande UC et aux unités de terminaux UT et comportent en ce but une logique non figurée ici qui leur permet à chacun de sélectionner un couple de deux signaux l'un d'horloge, l'autre de synchronisation parmi les couples de signaux fournis par la base de temps générale BTG. Dans une forme préférée de réalisation, chaque module de distribution MD, tel MDA1, est associé à un commutateur temporel et supervisé par le marqueur MQ commandant ce commutateur temporel, les modules de distribution associés à un plan étant ici référencés MDA, MDB, MDC ou MDD.

Chaque circuit d'horloge et de synchronisation CBT reçoit les signaux d'horloge et de synchronisation fournis par deux modules de distribution MD, via des liaisons de base de temps référencées globalement LBT, afin de mettre ces signaux à disposition des unités de commande UC d'un groupe GUC ou des unités de terminaux UT d'un groupe GUT déterminé, étant entendu que les unités de terminaux UT sont également rassemblées par groupes GUT comportant au moins une et généralement plusieurs unités de terminaux. Chaque circuit d'horloge et de synchronisation est de plus intercalé à des fins de synchronisation sur des liaisons multiplex globalement référencées MU qui relient les unités de terminaux d'un groupe GUT ou les unités de commande d'un groupe GUC au réseau de connexion RCX, pour des échanges de messages entre unités, chaque groupe GUC ou GUT étant relié à chaque plan RX du réseau de connexion par une liaison multiplex MU différente. Chaque liaison multiple MU est bidirectionnelle et comporte par exemple trente-deux voies de huit bits permettant un débit de deux mégabits/seconde dans chaque sens de transmission.

Préférablement les liaisons multiplex MU et les liaisons de base de temps LBT desservant un groupe GUC ou GUT sont combinées en deux faisceaux de constitution identique globalement référencés F1 et F2 en amont du circuit d'horloge et de synchronisation CBT desservant ce groupe et LC1, LC2 en aval de ce circuit du côté des unités, chaque unité du groupe étant relié à chacun des deux faisceaux LC1, LC2, qui comportent donc chacun deux liaisons multiplex MU et une liaison de base de temps LBT, puisqu'ils sont la continuation l'un d'un faisceau F1, l'autre d'un faisceau F2.

Les unités de terminaux UT sont classiquement destinées à desservir des terminaux différents, on a notamment fait figurer :

deux unités UTA1 et UTAe de terminaux d'abonnés AB d'un groupe GUTA de e unités de h terminaux d'abonnés ;

deux unités UTI1, UTIb de terminaux de circuits numériques appartenant à un groupe GUTI1 et un groupe GUTII comprenant éventuellement chacun b unités, b étant par exemple choisi égal à quatre pour l'application présentée, chaque unité desservant une jonction temporelle MIC bidirectionnelle à trente deux voies référencée MI, telle MI1 ;

une unité de brassage UTB qui sera défini plus loin et qui appartient à un groupe GUTB d'unités de brassage ;

une unité de terminaux auxiliaires UTX d'un groupe GUTX d'unités de terminaux auxiliaires qui desservent une pluralité de terminaux AUX assurant des fonctions auxiliaires spécifiques telles que des fonctions de signalisation multifréquence, de génération de tonalités et de films parlants, de conférence etc...

Les échanges entre les unités de terminaux UT et les unités de commande UC sont effectués au moyen de messages en procédure sémaphore, par exemple de type HDLC, qui empruntent les liaisons multiplex MU par l'intermédiaire de voies temporelles qui sont commutées par le réseau de connexion RCX.

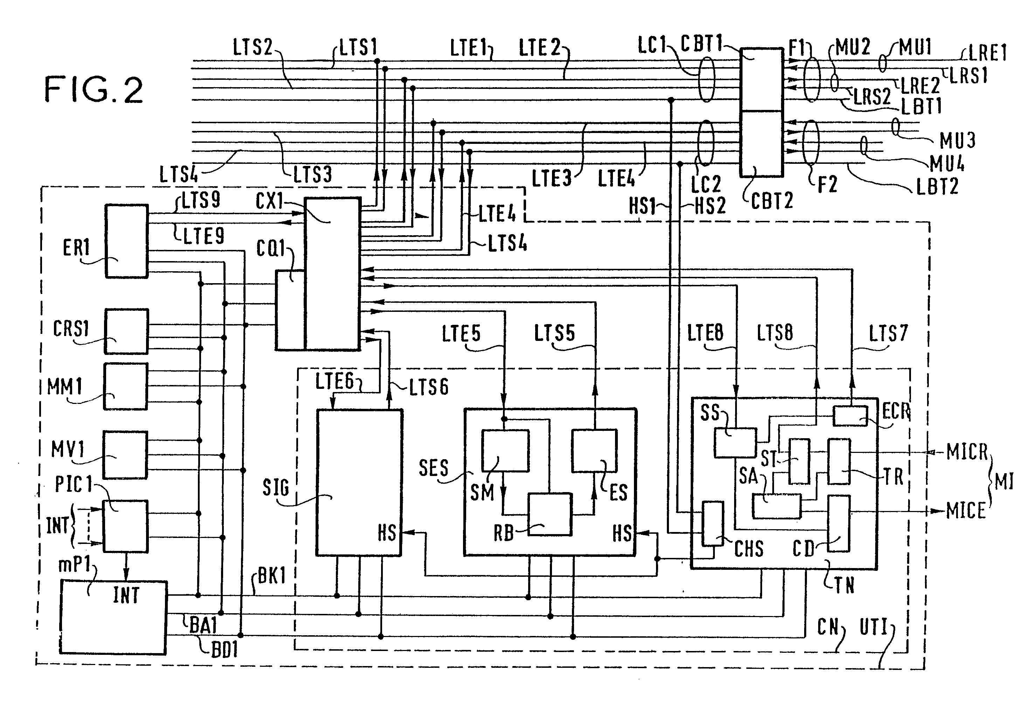

La figure 2 permet de préciser la constitution d'une unité de terminaux de circuit numérique UTI ou UTJ et ses liaisons avec le circuit d'horloge et de synchronisation CBT qui la dessert.

Chaque circuit d'horloge et de synchronisation est composé de deux demi-circuits dupliqués CBT1, CBT2 reliés l'un à un faisceau F1, l'autre à un faisceau F2 et desservant l'un un faisceau LC1, l'autre un faisceau LC2.

3

Les deux liaisons multiplex MU d'un faisceau F se décomposent chacune en une liaison dite réseau entrante LRE et en une liaison dite réseau sortante LRS, qui sont associées à une liaison de base de temps LBT comportant un fil de distribution d'horloge et un fil de synchronisation de trame, non figurés, pour former ce faisceau F, telles LRE1, LRS1, LRE2, LRS2, LBT1 pour le faisceau F1.

Chaque demi-circuit CBT1, CBT2 d'un circuit d'horloge et de synchronisation produit les signaux d'horloge et de synchronisation nécessaires à un groupe d'unités, au moyen d'une base de temps classique, non représentée, qui reçoit des signaux d'horloge provenant d'un module de distribution MD via une liaison de base de temps LBT, ces signaux sont transmis à toutes les unités d'un groupe par une liaison de signaux d'horloge et de synchronisation HS, tel HS1 du faisceau LC1 pour l'unité de terminaux UT présentée figure 2.

Chaque demi-circuit CBT1, CBT2 comporte également des circuits de synchronisation classiques non figurés pour la mise en phase des liaisons réseaux LRE, LRS auxquelles il est connecté avec des liaisons multiplex internes entrantes LTE et sortantes LTS qui desservent en parallèle toutes les unités de terminaux d'un groupe GUT.

Une unité de terminaux UTI comporte usuellement un microprocesseur mP1, une mémoire vive MV1 et une mémoire morte MM1, une matrice de connexion temporelle CX1 et son circuit de commande CQ1, un émetteur-récepteurt ER1 permettant au microprocesseur mP1 d'émettre et de recevoir des messages en procédure HDLC via des liaisons multiplex LTE9, LTS9 reliées au réseau de connexion CX1, un compteur de surveillance CRS1 programmable, un circuit PIC1 de prise en compte des interruptions destinées au microprocesseur mP1, un circuit numérique CN.

Le circuit numérique CN comporte un terminal numérique TN pour une jonction temporelle MIC bidirectionnelle MI composée d'une liaison émise MICE et d'une liaison reçue MICR, un circuit de synchronisation et de signalisation SES pour la signalisation à émettre et un circuit de réception de signalisation SIG pour la signalisation voie par voie portée par les voies temporelles IT16 de la liaison temporelle MICR.

Le microprocesseur mP1 d'une unité de terminal de circuit numérique UTI est relié par un bus d'adresse BA1, un bus de données BD1 et un bus de commande BK1, aux mémoires MM1, MV1, au circuit de commande CQ1, au compteur de surveillance CRS1, au circuit de prise en compte PIC1, à l'émetteur-récepteur ER1, ainsi qu'au terminal TN et aux circuits de signalisation SES, SIG du circuit numérique CN.

Le terminal TN et les circuits de signalisation SES, SIG d'une unité de terminal numérique UTI sont également reliés à la matrice de connexion temporelle CX1 de l'unité par des liaisons multiplex internes entrantes et sortantes LTE, LTS, de même que l'émetteur-récepteur ER1.

Le terminal TN assure d'une part l'interface entre la liaison temporelle reçue MICR et une liaison multiplex sortante LTS8 et d'autre par l'interface entre une liaison multiplex entrante LTE8 et la liaison temporelle émise MICE, il comporte en ce but des circuits spécifiques à l'un ou l'autre des sens de transmission et un circuit commun de choix de signaux d'horloge et de synchronisation CHS.

Le circuit de choix CHS d'une unité de terminal de circuit numérique UTI assure la sélection, sous le contrôle du microprocesseur mP1 de l'unité, des signaux transmis par l'une des deux liaisons de signaux d'horloge et de synchronisation HS1 et HS2 auxquelles l'unité est reliée.

La transmission entre liaison temporelle reçue MICR et liaison multiplex sortante LTS met en œuvre :

un transcodeur TR assurant la conversion en code binaire des signaux reçus en code HDB3 via la liaison temporelle reçue MICR, en vue de leur transmission sur la liaison multiplex sortante LTS8,

un circuit de synchronisation de trame ST pour synchroniser les signaux binaires reçus du transcodeur TR en vue de leur transmission sur la liaison réseau sortante LTS8,

un circuit d'alarme SA relié en sortie du transcodeur TR et du circuit de synchronisation ST pour assurer la détection des alarmes et leur signalisation.

De plus un circuit de génération de code repos ECR est relié à une liaison multiplex sortante LTS7 en vue de l'émission d'un code repos sur les voies inutilisées sur ordre du microprocesseur mP1 de l'unité de terminaux UTI qui le comporte, au rythme fixé par les signaux d'horloge et de synchronisation transmis par le circuit de choix CHS.

La transmission entre liaison multiplex entrante LTE et liaison temporelle reçue MICR met en œuvre un circuit d'injection de signal de synchronisation de trame SS inséré avec la liaison multiplex entrante LTE8 en entrée d'un transcodeur CD qui fournit à la liaison temporelle émise MICE des signaux en code HDB3 à partir des signaux binaires reçus.

Le circuit de synchronisation et signalisation SES comporte essentiellement un dispositif d'analyse de synchronisation de multitrame Sm relié par son entrée à une liaison multiplex entrante LTE5, un circuit de synchronisation RB relié au circuit de synchronisation de multitrame SM et à la liaison multiplex entrante et assurant la resynchronisation des signaux provenant de l'unité de brassage UTB par rapport au signal multitrame local et un circuit d'émission de signalisation ES connecté au circuit de synchronisation RB et relié par sa sortie à une liaison multiplex sortante LTS5.

Le circuit de réception de signalisation SIG qui est également relié à deux liaisons multiplex l'une entrante LTE6, l'autre sortante LTS6, assure la réception de la signalisation parvenant en voie seize sur la liaison temporelle reçue MICR, via la liaison LTS8 et le réseau de connexion temporel CX1.

Les circuits de signalisation SIG et SES d'une unité de terminaux numérique UTI sont également reliés en sortie du circuit de choix CHS dont ils reçoivent les signaux et aux bus BA1, BD1, BK1 du microprocesseur mP1 de même que le terminal numérique TN.

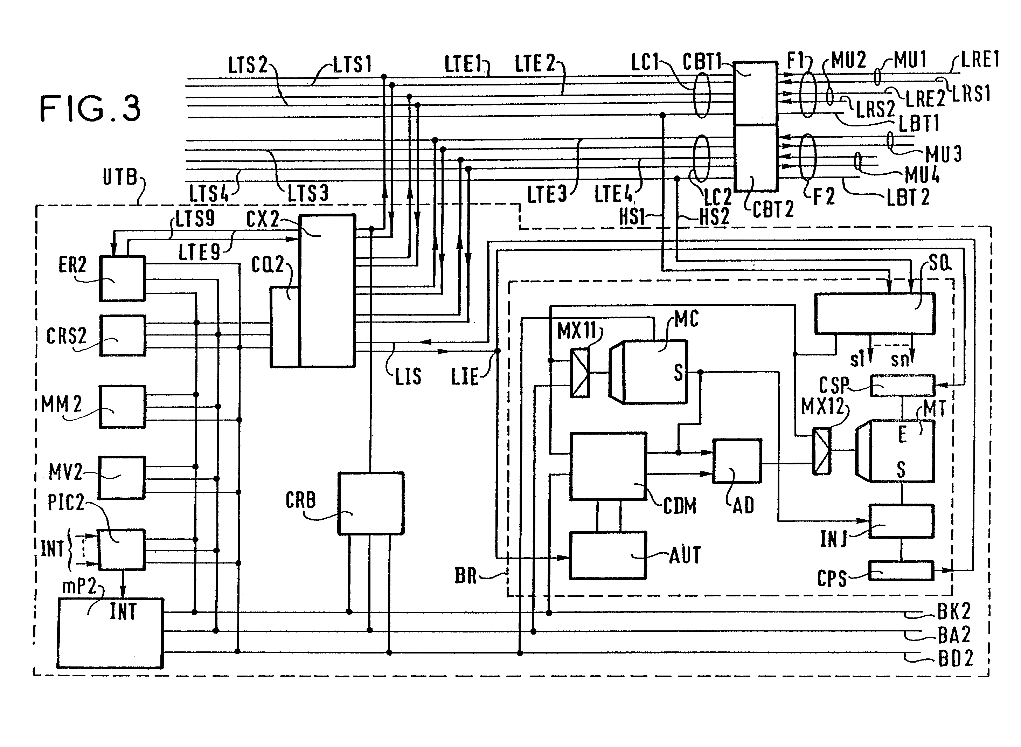

La figure 3 permet de préciser la constitution d'une unité de brassage UTB et ses liaisons LTE, LTS, HS avec le circuit d'horloge et de synchronisation CBT qui dessert le groupe auquel cette unité UTB appartient. Dans la mesure où les liaisons LTE, LTS, HS sont identiques à celles décrites en relation avec l'unité de terminaux numériques UTI, et ou le circuit d'horloge et de synchronisation CBT l'est également, ces liaisons et ce circuit figureront avec les mêmes références et ne seront pas redéfinis, sauf exception.

Ainsi qu'il a été indiqué plus haut le groupe GUTB d'unités de brassage UTB a même structure générale qu'un groupe d'unités de terminaux de circuits numériques UTI.

Une unité de brassage UTB comporte essentiellement un microprocesseur mP2, une mémoire vive MV2, une mémoire morte MM2, une matrice de connexion temporelle CX2 et son circuit de commande CQ2, un émetteur-récepteur ER2 permettant au microprocesseur mP2 d'émettre et de recevoir en procédure HDLC via des liaisons LE2, LS2 connectées au réseau de connexion CX2, un compteur de surveillance CRS2 programmable, un circuit PIC2 de prise en compte d'interruption pour le microprocesseur mP2, un brasseur BR et son circuit de contrôle CRB, un bus d'adresse BA2, un bus de données BD2 et un bus de commande BK2.

Un brasseur BR est destiné à desservir un nombre j de circuits numériques CN, correspondant par exemple à trente deux circuits soit 960 voies téléphoniques.

Sur ordre des unités de commande UC (figure 1) le réseau de connexion RCX aiguille les voies temporelles de rang seize portant la signalisation des voies réservées des j circuits numériques CN desservis par un brasseur BR vers j voies des liaisons multiplex MU, desservant le groupe GUTB d'unités de brassage UTB qui contient le brasseur BR considéré.

Sur ordre du microprocesseur mP2, la matrice de connexion temporelle CX2 aiguille ces $j = 32$ voies vers une liaison multiplex entrante LIE (figure 3) desservant le brasseur BR. Ce dernier effectue un brassage des signalisations reçues pour chaque voie sous forme d'un quartet (quatre bits) et reconstitue les $j = 32$ voies de signalisation sur une liaison interne sortante LIS qui le relie à la matrice de connexion CX2. A capacité maximale un brasseur BR est apte à brasser 960 quartets de signalisation.

Le brasseur BR gère également la synchronisation multitrame, car si les voies de signalisation provenant des différents circuits numériques CN ont été synchronisées au niveau de la trame, la position du signal de verrouillage de trame est quelconque en entrée de brasseur BR.

Pour prendre en compte les ordres de brassages, qui comportent un numéro de voie et un numéro de trame, le brasseur BR doit donc :

se fixer un signal de référence pour émettre des voies synchronisées et des signaux de verrouillage multitrame sur la liaison multiplex sortante,

détecter dans chaque voie entrante le signal de verrouillage multitrame et mémoriser le décalage de ce signal par rapport au signal de référence, ce décalage étant mesuré en nombre de trames ; en fonctionnement normal le décalage, pour une voie donnée, est fixe dans le temps,

traiter les anomalies notamment en cas de saut ou de dédoublement de trame et en cas de pertes des signaux de verrouillage multitrame.

Pour l'ensemble des caractéristiques relatives aux trames et multitrames on se rérérera notamment à l'avis G 732 du CCITT.

Pour les voies non utilisées, le brasseur doit également émettre un code repos.

Le brassage est effectué à l'aide d'une mémoire tampon de brassage MT reliée à la liaison multiplex entrante LIE par un circuit de conversion série-parallèle CSP. La mémoire de brassage MT comporte des mots d'un octet. En sortie la mémoire est lue par quartet et les octets à émettre sont composés par un circuit d'injection INJ relié à la liaison multiplex sortante LIS par un convertisseur parallèle-série CPS.

Un séquenceur SQ, dont la période est une multitrame, reçoit les signaux des liaisons HS et distribue les signaux d'adressage de voie synchrones avec le signal de référence cité plus haut, ainsi que des signaux s1 à sn de séquencement du fonctionnement interne du brasseur BR.

Les ordres de brassage sont inscrits par le microprocesseur mP2 dans une mémoire de commande MC adressée en écriture par le bus d'adresse BA2 et en lecture par le séquenceur SQ, via un multiplexeur MX11 dans les deux cas.

Le traitement des signaux de vêrrouillage multitrame est effectué par un automate AUT relié à la liaison multiplex entrante LIE et à un circuit de décalage de multitrame CDM.

Pour le brassage, la mémoire de brassage MT est adressée à travers un multiplexeur MX12 :

en écriture l'adressage séquentiel est fourni par le séquenceur SQ,

en lecture l'adressage est fourni par un additionneur AD qui ajoute à l'adresse d'octet donnée par la mémoire de commande MC le décalage de trame donné par le circuit CDM.

Le processus général de brassage pour une ligne réservée passant en transit dans l'autocommutateur entre une voie temporelle y d'une liaison MIC raccordée à l'une des unités de terminaux de circuits numériques d'un groupe GUTI et une voie temporelle z d'une liaison MIC raccordée à une unité de terminaux de circuits numériques d'un groupe GUTJ est le suivant :

la réservation est effectuée par une commande entrée émise par un périphérique PF de terminal d'opérateur tel PF4 et enregistrée en mémoire d'une unité de commande UC à laquelle elle est transmise par l'unité de commande de périphérique UCP,

l'unité de commande UC ordonne aux marqueurs du réseau de connexion RCX d'établir une connexion semi-permanente entre les voies de parole y et z,

l'identité des voies y et z est envoyée aux unités de terminaux de circuits numériques dans les groupes GUTI et GUTJ concernés, ainsi qu'à une unité de brassage UTB,

les voies de signalisation associées aux voies y et z sont reliées entre elles de manière totalement transparente, via l'unité terminale UTI concernée, le réseau de connexion RCX, l'unité de brassage UTB concernée, et à nouveau le réseau de connexion RCX et l'unité terminale UTJ concernée.

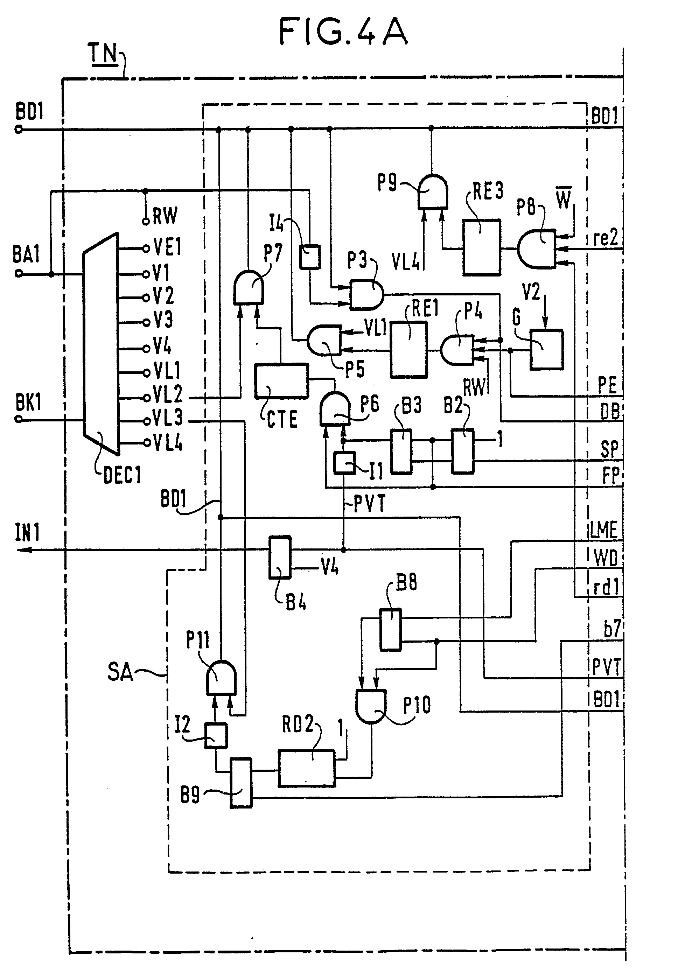

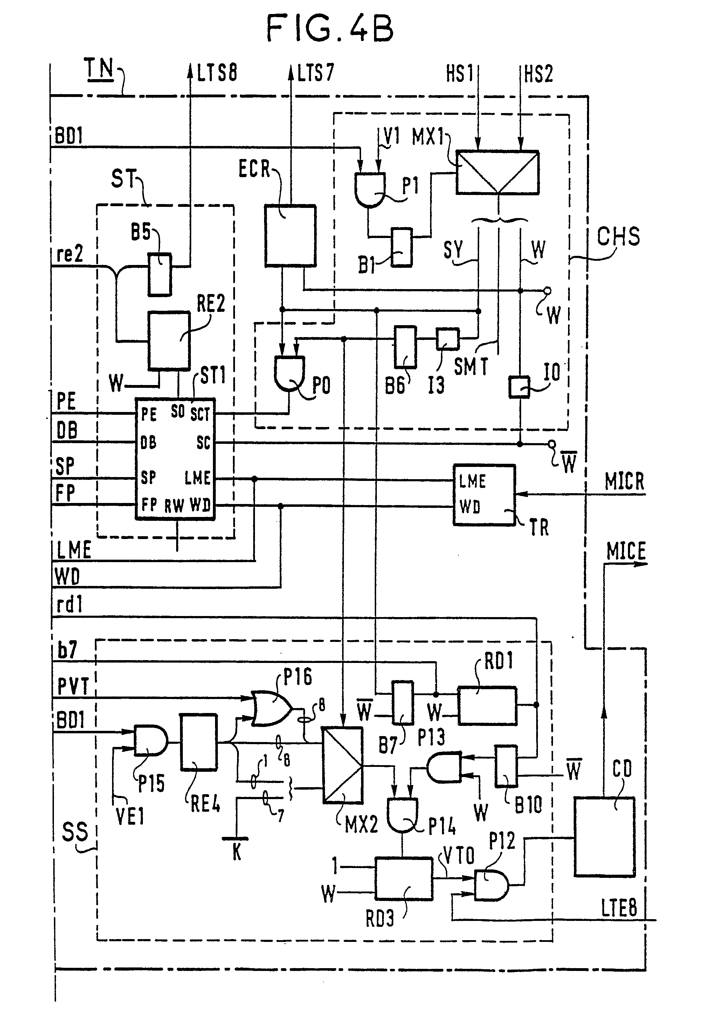

Les figures 4 à 7 suivantes permettent de préciser les circuits impliqués par la mise en œuvre de la présente invention, il est à noter que dans la suite de la description on appelle éventuellement porte, un ensemble de portes élémentaires identiques commandées identiquement.

Le terminal numérique TN détaillé en figure 4 comporte un décodeur DEC1 relié au microprocesseur mP1 de l'unité de terminaux UTI qui comporte ce terminal, via le bus d'adresse BA1 et le bus de commande BK1. Le décodeur DEC1 fournit des signaux de validation V1 à V4, un signal d'écriture VE1 et des signaux de lecture VL1 à VL4.

Dans ce même terminal TN le circuit de choix CHS comporte un multiplexeur MX1 relié par ses entrées aux liaisons de signaux d'horloge et de synchronisation HS1, HS2, il délivre un signal d'horloge W et son complément $\overline{W}$ via un inverseur 10 à la fréquence de 2 048 kilohertz dans l'application présentée, ainsi qu'un signal de synchronisation de trame SY et un signal de synchronisation de multitrame SMT.

Ce multiplexeur MX1 est adressé par une bascule B1 commandée par une porte P1, de type ET, qui reçoit un signal de validation V1 du décodeur DEC1 et une indication de choix de liaison HS par le microprocesseur mP1 de l'unité de terminaux via le bus de données BD1.

Le transcodeur TR fournit des signaux binaires transcodés LME et un signal d'horloge distante WD, à partir des signaux en code HDB3 fournis par la liaison temporelle reçue MICR.

La synchronisation de trame est réalisée par un circuit de synchronisation ST1 usuel, tel par exemple le circuit SM300 de la société Siemens, ce circuit ST1 fournit des signaux binaires synchronisés sur sa sortie SO à partir des signaux reçus sur son entrée LME reliée au transcodeur TR.

Le circuit de synchronisation ST1 est agencé pour surveiller les écarts entre l'horloge distante WD et l'horloge locale $\overline{W}$ qui lui est fournie sous forme complémentée $\overline{W}$ à une de ses entrées SC, il effectue les sauts ou doublement de trame nécessaires.

Une sortie SP du circuit de synchronisation ST1, indique la détection d'un signal de verrouillage trame parmi les signaux reçus du transcodeur TR ; en cas de non reconnaissance de ce signal de verrouillage de trame une impulsion est fournie par la sortie FP du circuit ST1 et la sortie SO est maintenue à l'état 1, de manière à produire un signal caractéristique de perte de verrouillage au profit des circuits en aval.

Dans le circuit d'alarme SA, deux bascules B2 et B3 et un inverseur I1 donnent un signal de perte de verrouillage de trame PVT qui provoque, via une bascule B4, une demande d'interruption IN1 au circuit de prise en compte d'interruption PIC1 de l'unité de terminaux UTI, et qui permet de positionner un bit d'alarme dans un signal de verrouillage émis sur la liaison temporelle émise MICE, ainsi que montré ultérieurement.

La nature de l'alarme est indiquée à une sortie DB du circuit de synchronisation ST1 qui est lue par le microprocesseur mP1 de l'unité de terminaux UTI. Pour cela un générateur G, validé par un signal de validation V2, émet une impulsion sur l'entrée PE du circuit de synchronisation ST1 et à une entrée d'une porte P4 de type ET qui est également reliée à la sortie DB et qui reçoit un signal RW. La porte P4 alimente un registre RE1 dont la sortie est reliée au bus BD1 via une porte P5.

La porte P5 relie le registre RE1 au bus BD1 à réception d'un signal de validation de lecture $\overline{VL1}$.

Une porte P3 de type ET reliée au bus BD1 par une entrée et recevant un signal complémenté $\overline{RW}$ via un inverseur 14, permet également d'accéder au registre RE1 via l'entrée de la porte P4 reliée à la sortie SB.

Les changements d'état de la sortie SP du circuit de synchronisation SP1 sont compatibilisés par un compteur CTE relié en sortie de bascule B3 par une porte P6 de type ET validée par l'impulsion émise à la sortie FP du circuit ST1. Le compteur CTE est lu par le microprocesseur mP1 via le bus de données BD1 et une porte P7 de type ET validée par un signal de validation VL2.

La sortie SO du module ST1 qui fournit les signaux émanant de la liaison temporelle reçue MICR après transcodage et resynchronisation, est reliée à l'entrée d'un registre RE2 dont la sortie donne accès à la liaison multiplex sortante LTS8 par une bascule B5. Le mot de verrouillage émis sur cette liaison LTS8 peut être lu par le microprocesseur mP1 de l'unité de terminaux UTI, pour cela il est chargé dans un registre RE3 relié via une porte P8 de type ET en sortie du registre RE2 en parallèle à la bascule B5.

L'instant du chargement contrôlé par l'intermédiaire de la porte P8 est fixé par un dispositif de synchronisation relié à l'une des entrées de cette porte P8, il est déterminé par le signal de synchronisation SY appliqué à une bascule B7 dont la sortie alimente un registre à décalage RD1 dont la sortie est reliée à l'entrée ci-dessus évoquée de la porte P8.

Une perte de synchronisation sur la liaison temporelle reçue MICR est signalée par l'apparition d'une succession de bits de valeur un en sortie de cette liaison.

La condition fixée pour déclencher une alarme est qu'il y ait moins de huit bits à l'état zéro dans une trame, ceci est contrôlé à l'aide d'un registre à décalage RD2 relié aux liaisons LME et WD issues du transcodeur TR via une porte P10 de type ET et une bascule B8. Ce registre RD2 est lu par le microprocesseur mP1 de l'unité de terminaux UTI via une porte P11 de type ET dont la sortie est reliée au bus de données BD1, dont une entrée reçoit un signal de validation de lecture VL3 et dont l'autre entrée reçoit le signal issu du registre à décalage RD2, via un inverseur 12 en série avec une bascule B9 reliée par ses entrées en sortie du registre RD2 et de la bascule B7.

Le signal de verrouillage de trame VTO est transmis sur la liaison temporelle émise MICE à l'entrée du transcodeur CD à l'aide d'une porte P12 de type ET recevant le signal VTO sur une entrée et les signaux émanant de la liaison multiplex entrante LTE8 sur une seconde entrée. En ce but le microprocesseur mP1 commande la génération de signaux binaire de valeur un pendant le temps d'injection du signal VTO, alors que pendant le temps correspondant au passage des autres voies, c'est le terminal lui-même qui maintient le signal VTO au niveau un. Le signal VTO est fourni en sortie d'un registre RD3 qui reçoit les signaux de verrouillage de trame paire VTP ou de trame impaire VTI émanant d'un multiplexeur MX2, via une porte P14 de type ET qui comporte une autre entrée reliée en sortie du registre RD1 via une porte P13 de type ET et une bascule B10, la porte P13 étant contrôlée par le signal d'horloge W et la bascule B10 par son complément $\overline{W}$.

Les bits deux à huit du signal de verrouillage de trame paire VTP sont cablés (K), le bit de ce signal et les huit bits du signal de verrouillage de trame impaire VTI sont fournis par le microprocesseur mP1 de l'unité de terminaux UTI via le bus de données BD1, une porte P15 validée par un signal d'écriture VE1 et un registre RE4 relié au multiplexeur MX2.

Ce multiplexeur MX2 est contrôlé par le signal de synchronisation SY via un inverseur 13 et une bascule B6, dont la sortie est également reliée à une entrée SCT du circuit de synchronisation ST1 via une porte PO de type ET dont l'autre entrée reçoit le signal SY.

Le bit trois du signal de verrouillage de trame impaire VTI, peut également être positionné à un par le terminal numérique TN via une porte P16 de type OU reliée à une entrée du multiplexeur MX2, en cas de perte de verrouillage de trame. La porte P16 reçoit d'une part le signal de perte de verrouillage de trame fourni par l'inverseur I1, elle est reliée d'autre part en sortie du registre RE4.

Comme indiqué plus haut, sur ordre du microprocesseur mP1 un code repos est émis en permanence sur la liaison multiplex sortante LTS7 par un circuit ECR usuel piloté par les signaux SY et W de manière à occuper les voies temporelles inutilisées par le terminal numérique TAB.

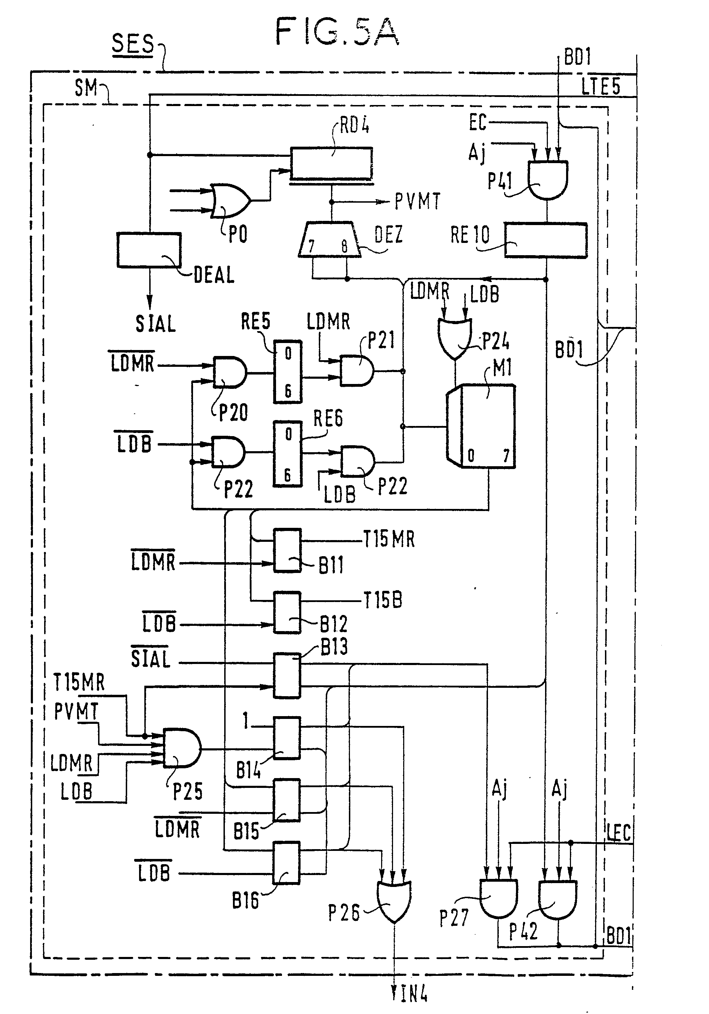

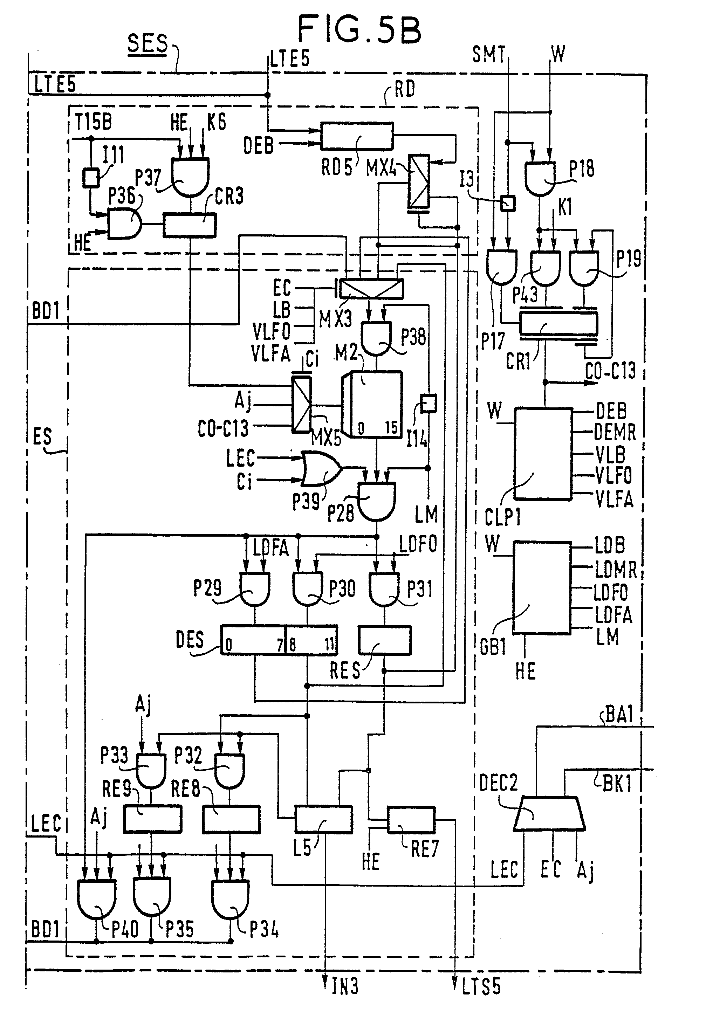

Le circuit de synchronisation et de signalisation SES présenté en figure 5, comporte essentiellement comme on l'a décrit plus haut un dispositif de recherche de synchronisation multitrame SM, un circuit de synchronisation RD du signal de brasseur BR par rapport au signal de multitrame local et un circuit d'émission de signalisation ES.

Ce circuit de synchronisation et de signalisation SES permet de traiter des supermultitrames de quatre trames, permettant d'augmenter le nombre de canaux de signalisation en voie de signalisation seize. En effet, avec une trame normale un bit de voie seize d'une trame correspond à un canal à 512 Hz, alors qu'avec la supermultitrame évoquée ci-dessus un bit de voie seize d'une trame permet d'obtenir un canal de 512 Hz, deux canaux à 256 Hz ou quatre canaux à 128 Hz pour une multitrame. La synchronisation multitrame est recherchée successivement pour les signaux de voie provenant d'une liaison temporelle reçue MICR et pour les signaux de voie provenant d'un brasseur BR. Pour cela la matrice de connexion temporelle CX1 aiguille la signalisation venant de la liaison temporelle reçue MICR sur la voie trente et un de la liaison multiplex entrante LTE5 et la signalisation réservée sur la voie quinze de cette même liaison LTE5.

Le circuit de synchronisation et de signalisation SES utilise d'une part des signaux d'adressage Aj, de validation en écriture EC et en lecture LEC fournis par un décodeur DEC2 reliés aux bus d'adresse BA1 et de commande BK1 associés au microprocesseur mP1, d'autre part des signaux d'horloge W de synchronisation de trame SY et de multitrame SMT fournis par le circuit de choix d'horloge et de synchronisation CHS que comporte le terminal numérique TN associé à ce circuit SES dans la même unité de terminaux UTI.

Les phases de fonctionnement interne du circuit de synchronisation et de signalisation SES sont déterminées par un compteur binaire CR1 piloté par le signal d'horloge W et synchronisé par le signal de synchronisation de multitrame SMT via un ensemble de portes P17, P18, P19, P43 du type ET et un inverseur 13 dûment combinés.

Le compteur binaire CR1 comporte quatorze bits permettant d'identifier à l'aide de trois bits C0 à C2 un numéro de bit, à l'aide de cinq bits C3 à C7 un numéro de voie temporelle et à l'aide de quatre bits C8 à C11 un numéro de trame dans une multitrame identifiée elle-même dans une supermultitrame par deux bits C12, C13.

Les bits C0 à C11 sont chargés à une valeur initiale K1 et les bits C12 et C13 sont rechargés via la porte P19 pour ne pas perdre les numéros de multitrame.

Les phases de fonctionnement du circuit de synchronisation et de signalisation sont obtenues soit directement sur les sorties du compteur CR1, soit par l'intermédiaire d'un circuit logique à portes CLP1, de plus si la phase doit être synchronisée avec un front de signal d'horloge W, un groupe de bascules GB1 contrôlé par ce signal d'horloge W est également utilisé, ce groupe GB1 fournit également un signal d'horloge d'émission HE.

Les principaux signaux fournis par le circuit CLP1 sont :

un signal de validation DEB pour la phase de réception d'un signal provenant d'un brasseur BR, via la

7

liaison multiplex entrante LTE5

un signal DEMR pour la phase de réception d'un signal provenant d'une liaison temporelle reçue MICR, via la liaison multiplex entrante LTE5

un signal VLB de validation de signal de brasseur BR à écrire dans une mémoire d'émission M2

un signal VLFO de valisation d'accès d'octet de poids fort à mettre en mémoire d'émission M2

un signal VLFA de validation d'accès d'octet de poids faible à mettre en mémoire d'émission M2

Les principaux signaux fournis par le groupe de bascule GB1 sont :

le signal d'horloge d'émission HE

un signal LDB de recherche de verrouillage de multitrame de brasseur BR

un signal LDMR de recherche de verrouillage de multitrame de liaison temporelle reçue MICR

deux signaux de lecture LDFO, LDFA de mémoire d'envoi de signalisation M2 pour deux octets successifs l'un dit de poids fort et le second dit de poids faible

un signal LM de contrôle d'entrée-sortie pour la mémoire d'envoi M2.

Le dispositif d'analyse de synchronisation multitrame SM se compose d'une mémoire de verrouillage M1 de type REPROM qui comporte ici 4 K mots de huit bits, l'état du verrouillage de multitrame VMT étant représenté par huit bits.

Parmi ces huit bits, les quatre premiers référencés 0 à 3 permettent un comptage de trame, lors de la détection d'un verrouillage de multitrame VMT, ces quatre bits sont à zéro et indiquent la première trame en trame zéro de la multitrame, ultérieurement ce comptage indique le rang et la trame traitée.

Le cinquième bit référencé 4 est destiné à signaler la non reconnaissance du mot de verrouillage dans une première trame de multitrame.

Le sixième bit référencé 5 est destiné à signaler que l'octet reçu est composé de zéros, il est mis à jour à chaque trame quel que soit l'état du verrouillage et il est utilisé pour la détection des bits de valeur zéro de voie temporelle de signalisation IT16 pendant une ou deux multitrames successives et lors de la reprise du signal de verrouillage de multitrame pour indiquer que la voie temporelle IT16 précédente a été reçue avec au moins un bit de valeur un.

Le septième bit référencé 6 indique la perte de verrouillage de multitrame PVMT après réception de deux verrouillages de multitrame erronés.

Le huitième bit référencé 7 indique un traitement de dernière trame de multitrame.

Les sept premiers bits de signal de verrouillage de multitrame sont mémorisés dans un registre d'état RE5 pour le traitement de la signalisation émanant de la liaison temporelle reçue MICR et dans un registre d'état RE6 pour la signalisation reçue du brasseur BR. Les registres d'état RE5 et RE6 sont reliés en sortie de mémoire de verrouillage M1 via respectivement une porte P20 pour le registre d'état RES5 et une porte P22 pour le registre d'état RE6, la porte P20 est validée par le complément LDMR du signal de recherche de verrouillage de multitrame $\overline{\text{LDMR}}$ et la porte P22 est validée par le complément $\overline{\text{LDB}}$ du signal de recherche de verrouillage de multitrame LDB.

Les signaux de recherche de verrouillage de multitrame LDMR et LDB assurent sélectivement la validation de la mémoire de verrouillage M1, via une porte P24 de type OU aux entrées de laquelle ils sont appliqués et la validation sélective de portes P21 et P23 placées en sortie l'une du registre d'état RE5, l'autre du registre d'état RE6, et reliée aux entrées d'adressage de la mémoire de verrouillage M1.

Ainsi à chaque cycle de recherche du verrouillage multitrame, l'adressage de la mémoire de verrouillage M1 pour l'élaboration d'un nouveau mot d'état est constituée des bits suivants :

les sept bits 0 à 6 caractérisant l'état précédent qui sont mémorisés dans le registre d'état RE5 ou RE6 ;

les deux bits 7 et 8 caractérisant l'état des deux quartets de la voie temporelle seize reçue ; pour cela les sorties d'un registre de signalisation RD4 sont reliées aux entrées d'un décodeur d'états zéro DEZ dont deux sorties indiquent respectivement l'état zéro des bits d'un des deux quartets ;

un bit 9 permettant le test de la mémoire de verrouillage M1 par le microprocesseur mP1 de l'unité de terminaux UTI

des bits 10 et 11 signalant le cycle dans lequel s'effectue la recherche de verrouillage de multitrame VMT, c'est-à-dire soit dans les signaux émanant d'un brasseur BR, soit d'un liaison temporelle reçue MICR.

Le microprocesseur mP1 de l'unité de terminaux UTI commande la transmission de la signalisation vers le circuit de synchronisation et de signalisation SES aux instants voulus de manière à permettre une mise en mémoire dans le registre de signalisation RD4. Ainsi les deux quartets transmis pendant l'intervalle de temps IT16 de la dix septième voie de la liaison temporelle reçue MICR sont mémorisés pendant l'intervalle de temps IT31 de la dernière voie de trame sous le contrôle du signal DEMR appliqué à l'entrée du registre RD4 via une porte PO de type OU.

Le traitement des deux quartets provenant de la liaison temporelle reçue MICR est assuré au cours de l'intervalle de temps IT14 de la quinzième voie de manière à mémoriser sous le contrôle du signal LDMR en mémoire de verrouillage M1 les deux bits 7 et 8 fournis par le décodeur d'état zéro DEZ, ce signal LDMR étant appliqué à la porte P24 de type OU.

De même les deux quartets émis par un brasseur BR sont reçus par le registre RD4 pendant l'intervalle de temps IT15 de la seizième voie sous le contrôle du signal DEB appliqué à la porte PO et les deux bits 7 et 8 correspondants fournis par le décodeur d'état zéro DEZ sont mis en mémoire de verrouillage M1 sous le contrôle du signal LDB pendant l'intervalle de temps IT30 correspondant à l'avant dernière voie de trame.

Le verrouillage de multitrame VMT est considéré comme perdu lorsque deux signaux de verrouillage sont successivement reçus erronés. Dans ce cas le verrouillage de multitrame VMT est recherché dans la seconde trame TR1 et dans l'avant dernière trame TR15 pour s'assurer qu'il n'y a pas eu doublement ou saut de trame en entrée du terminal numérique TN, avant que ne soit signalée la perte de verrouillage multitrame.

Le verrouillage de multitrame est également considéré comme perdu lorsque tous les bits de la voie de signalisation sont à l'état zéro pendant une durée correspondant à une ou deux trames.

Le verrouillage de multitrame est considéré comme repris à détection d'au moins un bit à l'état un dans l'intervalle de temps de voie IT16 qui précède le premier signal de verrouillage multitrame détecté.

Un groupe de six bascules bistables d'information B11 à B16 permet de mémoriser le passage de la dernière trame d'une multitrame et de donner l'alarme au microprocesseur mP1 par envoi d'une interruption IN4, les bascules B11, B12, B15 et B16 sont sélectivement reliées en sortie de mémoire de verrouillage M1 par leurs entrées et l'ensemble des six bascules est contrôlé de la manière évoquée ci-dessous.

Les bascules B11 et B12 fournissent respectivement des signaux T15MR et T15B de dernière trame de multitrame pour respectivement la liaison temporelle reçue MICR et le brasseur BR, ces signaux correspondent au contenu des bits 7 en mémoire de verrouillage M1 et les bascules sont respectivement validées par les compléments $\overline{\text{LDMR}}$ et $\overline{\text{LDB}}$ des signaux de recherche de verrouillage de multitrame LDMR et LDB.

Les bascules B15 et B16 fournissent respectivement des signaux de perte de verrouillage de multitrame pour respectivement la liaison temporelle reçue MICR et le brasseur BR, ces signaux correspondent au contenu des bits 6 en mémoire de verrouillage M1 et les bascules sont respectivement validées par les compléments $\overline{\text{LDMR}}$ et $\overline{\text{LDB}}$ des signaux de verrouillage de multitrame LDMR et LDB obtenus.

La bascule B13 fournit une indication d'alarme distante SIAL suite à la détection, par un circuit logique de détection DEAL, d'une information d'alarme transmise par la liaison multiplex LTE5 à laquelle le circuit de détection DEAL est connecté. La bascule B13 qui reçoit le signal de sortie du circuit de détection DEAL via un inverseur I10 est validée par le signal T15MR fourni par la bascule B11.

La bascule B14 fournit une indication relative à une perte de verrouillage distante indiquée par le bit 6 en sortie de registre de signalisation RD4, elle est reliée à la sortie correspondante de ce registre par une porte P25 de type ET validée simultanément par le signal de dernière trame T15MR en sortie de bascule B11, le signal de verrouillage de multitrame LDMR, le signal de perte de verrouillage de trame PVMT fourni par le bit de rang 6 en sortie du registre de signalisation RD4 et un signal C3 fourni par le compteur CR1.

Les sorties des bascules B13 à B15 sont reliées à une porte P26 de type OU fournissant un signal d'interruption IN4 à destination du circuit de prise en compte d'interruption P1C1 du microprocesseur MP1. Ce microprocesseur MP1 à la faculté de lire les sorties des bascules B12 à B16 par l'intermédiaire d'une porte multiple P27 et type ET dont les portes unitaires sont validées par le signal de lecture LEC et une information d'adresse AI fournis par le décodeur DEC2.

L'émission de signalisation est réalisée par le circuit d'émission ES à l'aide d'une mémoire d'envoi M2 de type RAM dans laquelle le microprocesseur M1 de l'unité de terminaux UTI peut écrire des mots contenant des ordres qui sont notamment :

émission d'un bit donné

autorisation de transit sans changement pour un bit émanant d'un brasseur

émission pendant une durée déterminée d'un bit avec une valeur déterminée, par exemple pour un temps variant de deux millisecondes à quatre secondes par pas de deux millisecondes, ou de façon cyclique continue avec une période égale à la période de multitrame.

Les ordres sont constitués ici de seize bits scindés en deux octets l'un de poids faible et l'autre de poids fort. L'octet de poids faible et les quatre premiers bits de l'octet de poids fort correspondent ici à la durée d'émission de signalisation, le cinquième bit ou bit 4 correspond à l'état du bit en émission, le sixième bit est masqué et indique lorsqu'il est à zéro que la voie est réservée aux signaux provenant du brasseur. Le septième bit indique une interruption à signaler et le huitième bit indique l'état du bit à émettre compte tenu du masque et du brasseur.

L'entrée en mémoire d'envoi M2 est contrôlée par une porte P38 de type ET qui reçoit les signaux fournis pour un multiplexeur MX3 et un signal de validation qui est le complément du signal LM de validation générale de sortie que fournit le groupe de bascules GB1 à une porte P28 de type ET qui contrôle la sortie de la mémoire d'envoi MT2, le signal LM étant complémenté par un inverseur I14 avant d'être appliqué à la porte P38.

Le multiplexeur MX3 est sélectivement relié par ses entrées de données au bus de donnée BD1, aux sorties d'un multiplexeur MX4, aux sorties d'un registre tampon RES et à deux groupes de sortie d'un décompteur DES. L'adressage sélectif des différentes entrées du multiplexeur MX3 est assuré :

par un signal d'écriture EC fourni par le décodeur DEC2 sur ordre du microprocesseur mP1 de l'unité de terminaux UTI pour les bits émanant du bus BD1,

par un signal de validation VALB pour les bits provenant du brasseur, via la liaison multiplex entrante LTE5 et un registre à décalage RD5 inséré en amont du multiplexeur MX4 et contrôlé par le signal de validation de réception DECB que fournit le circuit logique CLP1,

par des signaux de validation d'accès d'octet de poids fort VLFO, ou de poids faible VLFA pour d'une part les bits provenant du registre RES ou d'un groupe de bits de poids fort du décompteur DES, d'autre part les bits de poids faible du décompteur DES.

Le multiplexeur MX4 dont la sélection des entrées est contrôlée par un bit de masque 13 contenu dans le registre RES, comprend deux entrées l'une reliée en sortie de registre à décalage RD5 l'autre recevant un bit 12 du registre RES.

La mémoire d'envoi M2 est adressée via un multiplexeur MX5 apte à recevoir ;

une adresse Aj fournie par le microprocesseur mP1 via le bus d'adresse BA1 pour les ordres d'émission fournis via le bus de données BD1,

une adresse CO-C13 fournie par le compteur CR1 pour assurer un recyclage des informations émanant de la liaison temporelle reçue MICR,

une adresse fournie par un compteur CR3 pour assurer un recyclage des informations émanant du brasseur BR.

Le multiplexeur MX5 est cycliquement piloté par les signaux de comptage fournis par le compteur CR1, qui assure l'adressage de la mémoire d'envoi M2 tous les quatre intervalles de temps de voie pour constituer un mot de huit bits destiné à être émis dans la voie de signalisation IT16 sur la liaison temporelle émise MICE desservie par l'unité de terminaux UTI considérée.

Il y a double lecture de la mémoire d'envoi M2 à chaque cycle de signalisation MIC puisque les ordres d'émission comprennent deux octets, cette lecture s'effectue sous le contrôle des signaux de lecture LDFO pour l'un et LDFA pour l'autre. qui correspondent recpectivement chacun à un état du bit 1 du compteur CR1.

La durée d'émission d'une signalisation est fixée par le décompteur DES qui reçoit les douze bits destinés à cet usage. En ce but deux portes P29 et P30 se partagent la distribution des douze bits au décompteur DES elles sont insérées en sortie d'une autre porte P28 également de type ET qui est reliée en sortie de mémoire M2 et sont respectivement contrôlées l'une par le signal de lecture LDFA et l'autre par l'autre signal de lecture LDFO.

Le décompteur DES est décrémenté si le bit 11 qui est le bit de poids de durée d'émission est à l'état un, correspondant à un ordre d'émission à durée limitée, s'il est à l'état zéro l'émission est cyclique à chaque multitrame pour une durée non limitée par comptage.

Le registre RES stocke les bits 4 à 7 de l'octet de poids fort.

Au décomptage l'état du bit à émettre qui est fixé par le bit 15 de l'ordre d'émission est mémorisé dans un registre d'émission RE7 contrôlé en sortie par un signal d'horloge HE.

Les données modifiées contenues dans le décompteur DES et le registre RES sont introduites dans la mémoire d'envoi M2 à la même adresse que les données qui leur ont donné naissance, le compteur CR1 ayant gardé les sorties C5 à C13 dans le même état.

Dans le cas de signalisation émanant du brasseur BR, la mémoire d'envoi M2 est adressée par le compteur CR3 piloté par le signal d'horloge H2 appliqué à une porte P36 contrôlé par le complément du signal de dernière trame T15B qui est fourni par un inverseur I13, le compteur CR3 est synchronisé par le signal de dernière trame T15B appliqué à une porte P37 avec le signal d'horloge HE et une indication câblée K6.

Les informations émanant du brasseur BR sont reçues par le registre à décalage RD5 relié par son entrée à la liaison multiplex entrante LTE5 et piloté par le signal DEB que fournit l'unité logique CLP1.

La lecture de la mémoire d'envoi M2 est commandée soit par un bit Ci en sortie du compteur CR1, soit par le signal LEC émanant du microprocesseur mP1, l'un et l'autre étant appliqués à une porte P39 de type OU dont la sortie est reliée à une entrée de la porte P28 de type ET qui est connectée en sortie de mémoire d'envoi M2 et qui est contrôlée par le signal LM.

Un circuit logique LO formé de bascules non figurées, est relié aux sorties du décompteur DES et du registre RES, il permet d'émettre une interruption IN3 vers le circuit de prise en compte d'interruption CIP1 du microprocesseur mP1 en fin d'émission d'un bit de signalisation. Le circuit logique LO permet également de déclencher le chargement du registre RES dans un registre tampon RE8 via une porte P32 de type ET ainsi que l'introduction de l'adresse Aj concernée dans un registre RE9 via une porte P33 de type ET.

Les registres RE8 et RE9 et la mémoire d'envoi M2 sont lus par le microprocesseur mP1 via le bus de données BD1 et respectivement chacun une des portes P34, P35, P40 de type ET contrôlées par le signal de lecture LEC et une adresse Aj, la porte P40 étant insérée en aval de la porte P28.

Un registre de commande RE10 est relié par ses entrées à une porte P41 de type ET qui reçoit des données émanant du microprocesseur mP1 via le bus BD1, cette porte P41 étant contrôlée par le signal d'écriture et une adresse Ai.

Le registre de commande RE10 est relié par ses sorties à la mémoire M1 à des fins de test, à une entrée de remise à zéro des bascules d'alarme B13 à B16 et au bus BD1 via une porte P42 de type ET contrôlée de manière analogue à la porte P40.

Une porte P27 de type ET permet de relier les bascules B13 à B16 au microprocesseur mP1 via le bus de données BD1 à des fins de lecture.

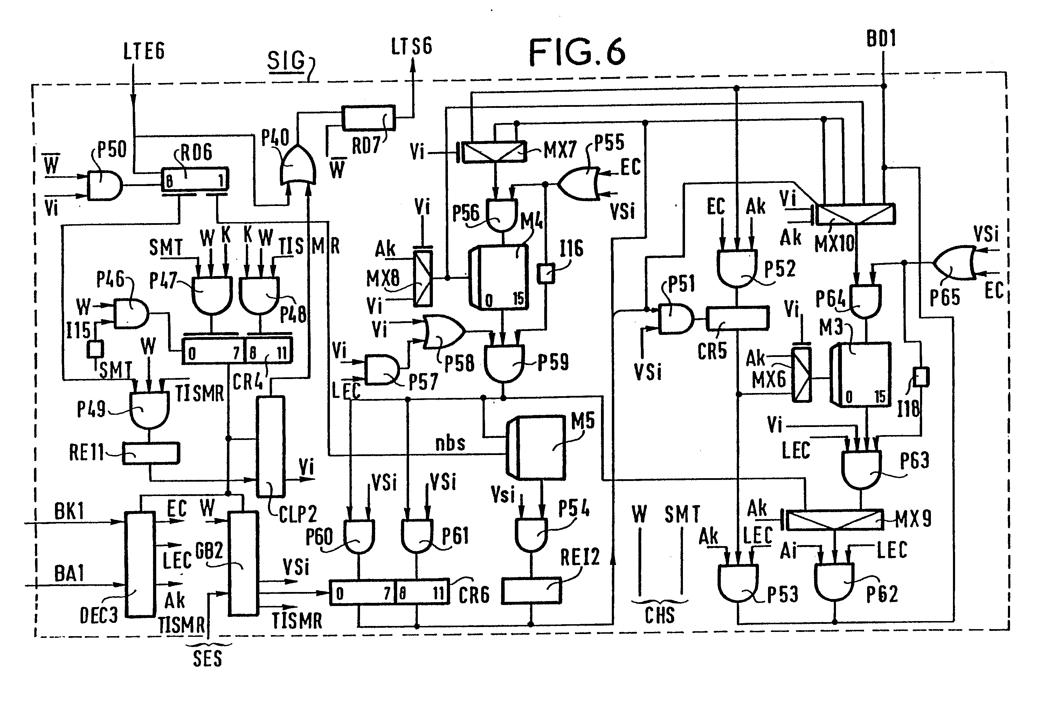

Le circuit de réception de signalisation SIG présenté en figure 6 reçoit la signalisation transmise en voie seize de la liaison temporelle reçue MICR, sur aiguillage du microprocesseur mP1 et via la liaison multiplex entrante LTE6, il assure la détection des changements d'état des bits de signalisation et la transmission des changements confirmés vers le microprocesseur mP1.

Un décodeur DEC3 relie le circuit SIG aux bus d'adresse BA1 et de commande BK1 et en déduit un signal d'écriture EC, un signal d'écriture LEC et des signaux d'adresse globalement référencés Ak.

Un compteur CR4 de type douze bits assure la synchronisation interne du circuit de réception de signalisation SIG à partir des signaux d'horloge W et de synchronisation de multitrame SMT qu'il reçoit du circuit de choix CHS appartenant à la même unité de terminaux UTI.

Une unité logique à portes CLP2 et un groupe de bascules de mise en phase GB 2 assurent l'adaptation des signaux de synchronisation aux besoins du circuit de réception de signalisation SIG, ils sont reliés en ce but au compteur de synchronisation CR4, et l'unité logique CLP2 qui contrôle le groupe de bascules GB2 est reliée au décodeur DEC3.

Le compteur de synchronisation CR4 a son entrée d'horloge activée par les signaux d'horloge W en l'absence de signal de synchronisation de multitrame SMT de valeur un, ceci étant réalisé par emploi d'une porte P46 de type ET recevant le signal SMT via un inverseur I15 et le signal W. De plus le signal SMT pour les huit premiers bits du compteur CR4 et le signal de dernière trame T15MR fourni par le circuit de synchronisation et de signalisation SES pour les quatre derniers bits assurent, la synchronisation du compteur par l'intermédiaire de portes P47 et P48 de type ET recevant l'une le signal W, le signal SMT et une indication câblée K3, l'autre le signal W, le signal T15MR et une indication câblée K4.

La signalisation provenant de la voie correspondant à l'intervalle IT16 de la liaison temporelle reçue MICR, via la liaison multiplex entrante LTE6, pour une ligne réservée est d'une part transmise à un registre à décalage récepteur RD6, d'autre part à un registre à décalage transmetteur RD7 via une porte P40 de type OU, la sortie de ce registre transmetteur RD7 alimentant la liaison multiplex sortante LTS6.

L'entrée de commande du registre récepteur RD6 est contrôlée par une porte P50 de type ET qui reçoit le complément $\bar{W}$ du signal d'horloge et un des signaux de validation Vi fourni par l'unité logique CLP2, l'entrée de commande du registre transmetteur RD7 reçoit également le complément $\bar{W}$ du signal d'horloge fourni par le circuit de choix d'horloge CHS.

Le registre récepteur RD6 a ses sorties de bit 5 et 7 reliées à un registre RE7 qui mémorise le numéro de supermultitrame tel que défini par ces bits 5 et 7, une porte P49 de type ET est insérée en ce but entre les registres RD6 et RE7, elle est contrôlée par le signal d'horloge W et le signal de dernière trame T15MR transmis par le groupe de bascules GB2. La sortie du registre de numéro de supermultitrame RE7 est reliée à une entrée de l'unité logique CLP2, de manière à permettre l'accès aux signalisations transmises par des canaux à faible débit répartis sur deux ou quatre multitrames.

En cas de changement d'état d'un octet de signalisation reçu sur une même voie au cours des multitrames successives, ce changement d'état est inscrit dans une mémoire d'état M3 utilisée en pile FIFO (premier entré-premier sorti) qui est apte à être lue par le microprocesseur mP1 de l'unité UTI. En ce but la mémoire d'état M3 est adressée à travers un multiplexeur MX6 soit par le microprocesseur mP1 fournissant une adresse Ak, soit par un compteur CR5. Le multiplexeur étant piloté par un signal Vi issu de l'unité logique CLP2.

Les changements d'état sont détectés et confirmés par l'intermédiaire d'une mémoire vive de stockage M4 et d'une mémoire de traduction M5 de type PROM.

L'état d'un bit de signalisation est stocké dans deux mots consécutifs en mémoire de stockage M4 qui comprennent :

un bit 15 de masque,

deux bits 13 et 14 correspondants à un compteur de confirmation de changement d'état pour éviter l'influence de signaux parasites,

un bit 12 correspondant à l'état actuel du bit de signalisation analysé,

un bit 11 correspondant au dernier état stable de ce bit de signalisation pendant une durée d'au moins quatre secondes,

douze bits 0 à 11 correspondant à un compteur de durée du nouvel état du bit de signalisation.

Un nouvel état se déduit de l'état précédent de la manière suivante, en premier lieu simultanément la mémoire de stockage M4 et le registre récepteur RD6 produisent respectivement les seize bits de deux mots relatifs à un bit de signalisation via une porte P59 de type ET et le nouveau bit de signalisation nbs correspondant.

Le bit nbs et les cinq bits 11 à 15 sont appliqués aux entrées d'adresse de la mémoire de traduction M5 qui fournit en réponse un mot de six bits, ce mot est chargé dans un registre tampon RE12 via une porte P54, de type ET, contrôlée par un signal VSi du groupe de bascules GB2.

Simultanément les bits 0 à 11 sont appliqués aux entrées d'un compteur CR6 via des portes P60, P61 de type ET contrôlées respectivement par deux signaux VSi fournis par le groupe de bascules GB2 sous le contrôle du compteur CK7. Le compteur CR6 est incrémenté par le compteur CR4 via le groupe de bascules GB2.

Les douze bits contenus dans le compteur CR6 et quatre des six bits fournis par la mémoire de traduction M5 sont apliqués en entrée de mémoire de stockage M4 via une porte P56 de type ET dont les entrées sont reliées en sortie d'un multiplexeur MX7 qui est piloté par un signal Vi fourni par l'unité logique CLP2. Le multiplexeur MX7 est relié par un second groupe d'entrées au bus de données BD1 de manière à permettre l'exécution de tests, la porte P56 est pour sa part contrôlée via une porte P55 de type OU soit par le signal d'écriture EC soit par un signal Vsi fourni par le groupe de bascules GB2.

L'adressage de la mémoire de stockage M4 est assuré soit par l'unité logique CLP2 au moyen d'un signal Vi, soit par une adresse Ak émise par le microprocesseur mP1, via le bus d'adresse BA1, le signal Vi et l'adresse Ak étant l'un et l'autre appliqués à un multiplexeur MX8, piloté par un autre signal Vi de l'unité logique CLP2.

La porte P59 en sortie de mémoire de stockage M4 alimente le comporteur CR6, la mémoire de traduction M5 et un multiplexeur MX9, elle est contrôlée d'une part par le signal de sortie de la porte P55 complémenté par un inverseur I16 et d'autre part par une porte P58 de type OU recevant d'une part un signal Vi provenant de l'unité logique CLP2 d'autre part un autre signal Vi provenant de cette même unité combiné avec le signal LEC au moyen d'une porte P57 de type ET.

Un changement d'état confirmé est indiqué par l'état un du bit de poids fort référencé ce du mot lu en mémoire de traduction M5, ce bit chargé dans le registre RE12 est fourni à une entrée d'activation d'un multiplexeur MX10 placé en entrée de la mémoire d'état M3, de manière à y permettre le chargement des contenus du registre RE12 et du compteur CR6.

Le multiplexeur MX10 est piloté par un signal Vi émanant de l'unité logique CLP2 et par une adresse Ak fourni par le microprocesseur mP1 via le vus d'adresse BA1. Le multiplexeur MX10 est relié par ses entrées au bus de données BD1, en sortie de multiplexeur MX8 d'adressage de la mémoire de stockage M4, en sortie du registre RE12 et en sortie du compteur CR6. La liaison du multiplexeur MX10 au bus de données BD1 permet le test de la mémoire d'état M3, la liaison du multiplexeur MX10 en sortie du multiplexeur MX8 permet l'introduction en mémoire d'état du numéro d'identification du bit de signalisation auquel correspond le changement d'état.

Une porte P64 de type ET est insérée entre le multiplexeur MX10 et la mémoire d'état M3, elle est pilotée via une porte P65 de type OU soit par le signal d'écriture EC soit par un signal Vsi émanant du groupe de bascules GB2.

Une porte P63 de type ET est insérée en sortie de mémoire d'état M3 en amont du multiplexeur MX9 elle est contrôlée par un signal Vi émanant de l'unité logique CLP2, par le signal de lecture LEC et par le complément du signal de sortie de la porte P65 qui contrôle l'écriture en mémoire d'état, tel que fourni par un inverseur I18.

Le multiplexeur MX9 qui est relié comme on l'a vu en sortie de porte P59 de lecture de mémoire de stockage M4 et en sortie de porte P63 de lecture de mémoire d'état M3 est relié au bus de données BD1 via une porte P62 de type ET contrôlée par le signal de lecture LEC et une adresse Ak fourni par le décodeur DEC3 qui pilote également le multiplexeur MX9 par deux autres adresses Ak.

Le bit ce provoque également la remise à zéro du compteur CR6 et il assure la progression du compteur CR5 via une porte P51 de type ET pilotée par un signal Vsi du groupe de bascules GB2.

Le compteur CR5 est relié par ses entrées de prépositionnement au bus de données BD1 via une porte P52 de type ET qui est pilotée par le signal d'écriture EC et par une adresse Ak du décodeur DEC3.

Le compteur CR5 qui est relié par ses sorties au multiplexeur MX6 est également relié au bus de données BD1 par l'intermédiaire d'une porte P53 de type ET pilotée par le signal de lecture LEC et une adresse Ak.

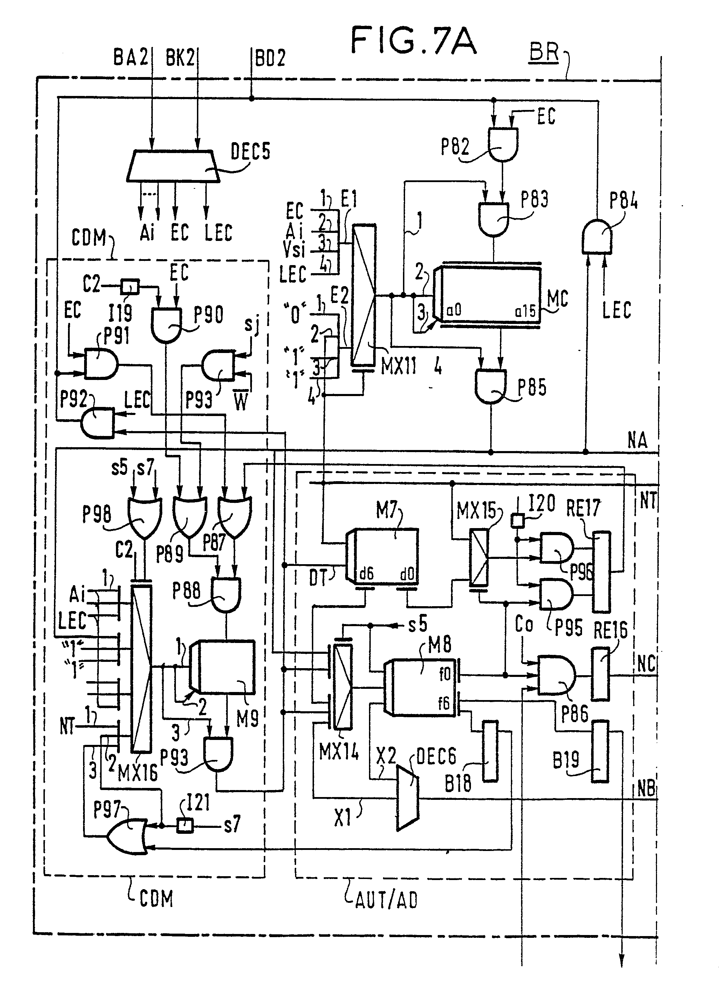

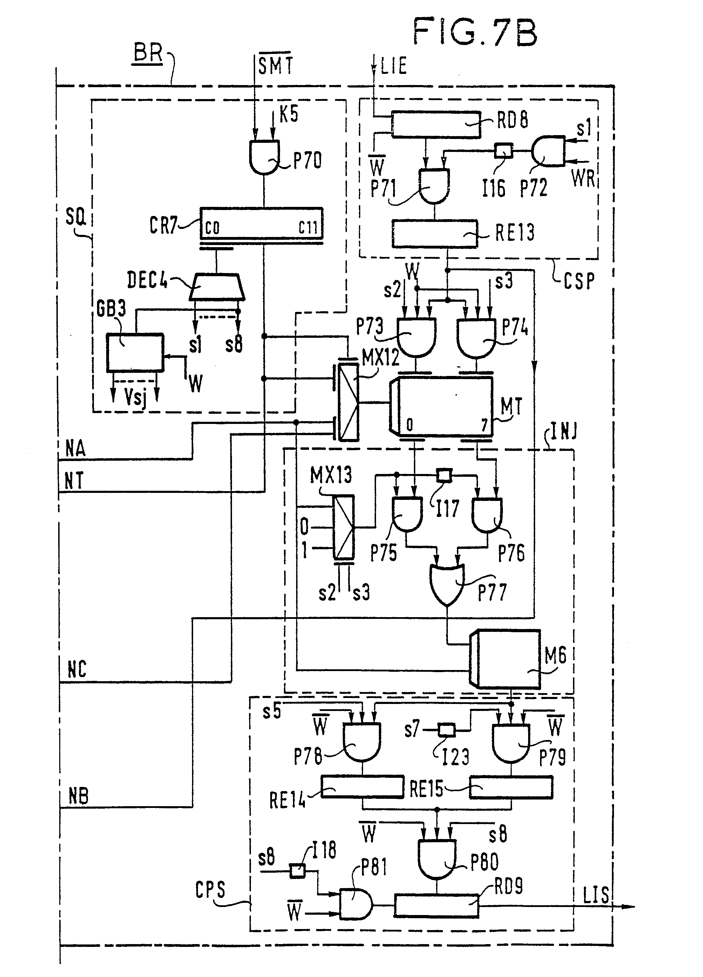

Le brasseur BR présenté à la figure 7 comporte un décodeur DEC5 fournissant des signaux d'adresse Ai, d'écriture EC et de lecture LEC à partir des informations reçues du microprocesseur mP2 de l'unité de brassage UTB le comportant, via un bus d'adresse BA2 et un bus de commande BK2 qui les relient.

Le brasseur BR reçoit également le signal d'horloge W et son complément $\overline{W}$, un signal d'horloge WR déphasé d'un quart de période par rapport au signal W, le signal de synchronisation de multitrame SMT et son complément $\overline{SMT}$, d'un circuit non représenté qui est équivalent au circuit de choix d'horloge CHS et qui est identiquement relié aux liaisons de signaux d'horloge et de synchronisation HS1 et HS2 d'un circuit CBT.

Un séquenceur SQ organisé autour d'un compteur CR7 permet de régler la succession des opérations à réaliser sur chaque voie.

En ce but le compteur CR7 qui comporte douze sorties de bits C0 à C11 est piloté par le signal d'horloge W et synchronisé par le signal $\overline{SMT}$ qui lui est fourni via une entrée d'une porte P70 de type ET dont l'autre entrée est prépositionnée à une valeur K5 par cablage. Les bits C0 à C2 fournis par les trois premières sorties du compteur CR7 sont appliqués à un décodeur DEC4 qui fournit huit signaux de séquencement sous forme de bits s1 à s8 pour le déroulement des opérations au cours de huit temps successifs d'horloge ; la première moitié du cycle d'opération sur une voie définie par la fourniture des temps s1 à s4 et la présence d'un bit C4 de valeur zéro est réservée au dialogue avec le microprocesseur mP2.

Un groupe de bascules GB3 reliées aux sorties du décodeur DEC4 et contrôlées par le signal d'horloge W fournit des signaux synchronisés de validation VSj.

La mémoire tampon de brassage MT à son accès contrôlé par un circuit de conversion série parallèle CSP relié par son entrée à la liaison interne entrante LIE. Ce circuit CSP est constitué d'un registre d'entrée à décalage RD8 relié en aval de la liaison interne entrante LIE et contrôlé par le signal

complémentaire d'horloge $\overline{W}$ et d'un registre tampon RE13 qui reçoit en parallèle les huit bits d'une voie de signalisation transmise par la liaison LIE via le registre d'entrée RD8 et une porte P71 de type ET validée via une porte P72 de type NAND qui reçoit les signaux s1 et WR.

Des portes P73 et P74 de type ET reliées en sortie du registre RE13 dont elles reçoivent huit bits en parallèle, sont sélectivement validées l'une par le signal d'horloge W et le signal s2, l'autre par le signal W et le signal s3, elles alimentent sélectivement les entrées de la mémoire de brassage MT en quartet.

L'adressage de cette mémoire de brassage MT s'effectue par l'intermédiaire d'un multiplexeur MX12 relié d'une part aux sorties de bits C3 à C11 du compteur CR7 qui définissent une voie dans une trame de multitrame, d'autre part à la sortie de mémoire de commande MC par une liaison NA et à la sortie d'un registre tampon RE16 par une liaison NC d'une mémoire qui sera définie plus loin, la sélection alternative des entrées du multiplexeur MX12 étant assuré par le bit C2 qui lui fournit le compteur CR7 sur sa sortie corespondante.

Le circuit d'injection INJ placé en aval de la mémoire de brassage MT comporte des portes d'accès P75, P76 de type ET pour les quartets à brasser, ces portes reliées en amont à deux groupes de sorties de quartet de la mémoire de brassage MT sont sélectivement et complémentairement validées par les signaux de sortie d'un multiplexeur MX13 relié directement à une entrée de la porte P75 et via un inverseur I17 à la porte P76.

Le multiplexeur MX13 et adressé par les sorties de bit s2 et s3 du décodeur DEC4 et il possède trois entrées dont la première est reliée en sortie de mémoire de commande MC du brasseur CB dont la seconde est fixée au niveau zéro et la troisième fixée au niveau un.

Les sorties des portes 75 et 76 contrôlent une mémoire de génération de quartet M6 de type PROM, via une porte P77 de type OU, en liaison avec les bits a12 à a15 qui définissent les paramètres des codes utilisés et qui sont fournis par la mémoire de commande MC.

Le circuit de conversion parallèle-série placé en sortie de mémoire M6 reçoit les deux quartets destinés à constituer un octet dans deux registres tampons RE14, RE15 via des portes P78, P79 de type ET qui sont contrôlées par le signal complémentaire d'horloge $\overline{W}$ et d'une part le signal de sortie s6 du décodeur DEC4 pour la porte P78 et d'autre part le signal de sortie s7 de ce décodeur pour la porte P79.

Les sorties des registres tampons RE14, RE15 sont reliées à un registre d'émission à décalage RD9 via une porte P80 de type ET qui est contrôlée par le signal complémentaire d'horloge $\overline{W}$ et le signal de séquencement s8 du décodeur DEC4. Le registre d'émission qui reçoit les bits des quartets en parallèle assure leur émission en série sur la liaison interne d'émission LIS, sous le contrôle d'une porte P81 de type ET qui reçoit le signal complémentaire d'horloge $\overline{W}$ et un signal fourni par un inverseur I18 inséré en aval de la sortie s8.

La mémoire de commande MC de brasseur BR est de type RAM, elle contient les ordres de brassage et elle est reliée en ce but par ses entrées au bus de données BD2, du microprocesseur mP2, via deux portes P82, P83 de type ET en série, qui sont respectivement validées par le signal d'écriture EC pour la porte P82 et par un bit référencé 1 positionné à l'état un du signal émanant du multiplexeur MX11 qui contrôle l'adressage de la mémoire de commande MC pour la porte P83.

La mémoire de commande MC est reliée par ses sorties de bits a0 à a15 à une porte P85 de type ET qui est validée par un ordre d'écriture 1 émanant du multiplexeur d'adressage MX11, la sortie de la porte P85 est relié au multiplexeur MX12, au bus de données BD2 par une porte P84 validée par le signal de lecture LEC, à l'additionneur AD et au circuit le décalage de multitrame CDM.

Le multiplexeur d'adressage MX11 a deux groupes d'entrées E1 et E2 dont l'un E1 est réservé au microprocesseur mP2 et reçoit les signaux d'écriture EC, de lecture LEC, d'adresse Ai et un signal de temps VSi du groupe de bascules GB3 sur des premières entrées référencées 1 à 4, l'autre E2 est réservé au compteur CR7 du séquenceur dont il reçoit les bits C1, C3 à C11 sur une seconde entrée référencée 2 des secondes entrées référencées 1, 3, 4 étant fixés par cablage à la valeur zéro pour l'entrée 1 et un pour les deux autres. La sortie du multiplexeur MX1 fournit les bits apparus sur les entrées référencées 2 et 3 qui sont sélectionnées par le bit C2 du compteur CR7, ces bits sont appliqués aux entrées d'adressage 2 et de validation d'écriture 3 de la mémoire de commande MC.

Les adresses fournies par le compteur CR7 qui comportent dix bits permettent de délivrer deux ordres de brassage soit un par quartet à traiter.

Chaque ordre de brassage concerne un quartet de signalisation et comporte seize bits référencés a0 à a15 dont les significations sont données ci-dessous ;

a0 est un bit de sélection de quartet dans un octet de signalisation,

a1 à a9 définissent l'adresse de l'octet dans la multitrame par ses numéros de trame et de voie,

a10 et a11 définissent l'état de la voie (repos, état normal, perte de synchronisation...),

a12 à a15 correspondent à des paramètres concernant les codes utilisés, tels le code repos, les codes d'alarme, ces paramètres sont traités par le circuit d'injection INJ qui les reçoit de la mémoire de brassage MT.

L'automate AUT et l'additionneur AD sont organisés autour de deux mémoires M7 et M8 de type PROM.

La mémoire dite d'état de trame M7 de l'automate AUT est apte à emmagasiner deux cent cinquante six mots de sept bits d0 à d6, elle est adressée par le numéro NT de la trame en cours qui lui est fourni par les quatre bits C8 à C11 en sortie du compteur CR7 du séquenceur SQ via la liaison NT et par une valeur de décalage DT qui lui est fournie par le circuit de décalage de multitrame CDM. Cette mémoire M7 fournit d'une part le numéro de trame NT décrémenté de un soit NT - 1 sur ses sorties de bits d0 à d3 et une analyse de cas sur les sorties de bits d4 à d6.

Cette analyse de cas donne les variantes ci-dessous

| | | |
|---|---|---|
| d6 = 0 | | si NT = 0 |
| d6 = 1 | | si NT différent de zéro |
| **d4 = 0** | **d5 = 0** | **si NT = DT-1** |
| **d4 = 1** | **d5 = 0** | **si NT = DT** |
| **d4 = 0** | **d5 = 1** | **si NT = DT+1** |
| **d4 = 1** | **d5 = 1** | **pour tous les autres cas.** |

Les bits d4 à d6 sont appliqués en entrée d'un multiplexeur MX14 adressant la mémoire dite d'addition et d'état de voie M8. Les bits d0 à d3 sont appliqués à un groupe d'entrées d'un multiplexeur MX15 qui comporte un second groupe d'entrées reliées aux sorties C8 à C11 du compteur CR7 du séquenceur SQ via la liaison NT, la sélection du groupe d'entrées étant assurée d'une manière qui sera évoquée plus loin.

Un registre tampon RE17 est relié en sortie du multiplexeur MX15 par un premier groupe d'entrées et via une porte P96 de type ET validée par le complément du signal de séquencement $\overline{s5}$ fourni par un inverseur I20 relié en sortie du décodeur DEC4, il mémorise le numéro de trame fourni par le compteur CR7 ou par la mémoire d'état de trame M7.

La mémoire d'addition et d'état de voie M8 qui est apte à mémoriser mille mots de sept bits, réalise d'une part l'analyse du verrouillage de trame pour l'automate AUT et d'autre part les additions pour l'additionneur AD, pour cela elle est adressée par un multiplexeur MX14 piloté par le signal de séquencement s5 émis par le décodeur DEC4. Il est rappelé que le verrouillage de multitrame VMT est un octet dont les bits 0 à 3 sont de valeur zéro et que la reprise du verrouillage après perte implique la détection d'un octet ayant au moins un bit de valeur un (avis G732 du CCITT). Ces deux critères sont pris en compte par un décodeur DEC6 relié par une liaison NB en sortie du registre RE13 du circuit CSP, ce décodeur fournit un signal de valeur zéro caractéristique de la présence d'un verrouillage de multitrame sur l'une de ces sorties X1 ou X2 lorsque le premier ou le second quartet de l'octet qu'il reçoit est de valeur zéro. Les quatre bits f1 à f4 des mots en mémoire d'état de voie M8 traduisent l'état normal pour lequel le signal de verrouillage de multitrame VMT a été détecté, soit dans un état correspondant à une première absence de verrouillage, soit dans un état correspondant à une recherche de verrouillage suite à une seconde absence de verrouillage en succession.

Le bit fo des mots en mémoire d'état de voie M8 correspond au cas ou le signal de verrouillage de multitrame VMT est présent dans la voie en cours de brassage, il est appliqué à l'entrée de sélection du multiplexeur MX15, à une entrée d'une porte 86 de type ET insérée en amont du registre RE16 et contrôlé par le signal d'horloge déphasé WR et le bit CO du compteur CR7.

Le bit f5 correspond à une commande de chargement du circuit de décalage de multitrame CDM il est appliqué en ce but à une bascule B18. Le bit f6 correspond à une demande d'interruption IN6 auprès du circuit de prise en compte d'interruption PIC2 du microprocesseur mP2, il est appliqué en ce but à une bascule B19.

Les bits f0 à f4 paraissant en sortie de mémoire M8 sont chargés dans le registre RE16 via la porte 86 définie ci-dessus afin d'être appliqués au multiplexeur MX12 adressant la mémoire de brassage MT, pour assurer la fonction addition.

Les bits f1 à f4 sont appliqués à un registre RE17 via une porte P95 de type ET contrôlée par le complément du signal s5 fourni par le décodeur DEC4 du séquenceur SQ.

Comme on l'a vu, la mémoire d'état de voie M8 est adressée par le multiplexeur MX14 en liaison avec la sortie X2 du décodeur DEC6 et la sortie de bit de séquencement du décodeur DEC4.

Le multiplexeur MX14 fournit huit bits d'adressage qui lui sont appliqués par un premier groupe d'entrées reliées aux quatre sorties de bits a6 à a9 de la mémoire de commande MC et a quatre sorties de bits de décalage du circuit de décalage du multitrame CDM pour la fonction addition, ou par un second groupe d'entrées reliées aux trois sorties de bits d4 à d6 de la mémoire M7, à la sortie X1 du décodeur DEC6 et à quatre sorties de bits f1 à f4 d'état de voie du circuit de décalage de multitrame CDM pour la fonction analyse. La sélection des groupes d'entrées du multiplexeur MX14 est assurée par le signal de séquencement s5.

Le circuit de décalage de multitrame CDM comporte essentiellement une mémoire de décalage et d'état de voie M9 et ses accès, la mémoire M9 emmagasine des mots de huit bits effetés chacun à une voie de trame en cours, chaque mot étant composé de deux champs de quatre bits qui indiquent respectivement l'état de voie tel que fourni par la mémoire d'état de voie M8 et le décalage DT fourni par le compteur CR7 ou par la mémoire de décalage 117, via le registre RE17 dans chaque cas.

L'accès en mémoire M9 est contrôlé par une porte P88 de type ET dont les entrées sont respectivement reliées à deux portes P87, P89 de type OU. La porte P87 est reliée d'une part en sortie du registre RE17 de l'automate AUT, d'autre part au bus de données BD2 via une porte P91 de type ET, contrôlée par le signal d'écriture EC. La porte P89 est reliée d'une part en sortie d'une porte P90 de type ET qui est reliée à la sortie de bit C2 du compteur CR7 via un inverseur I19 et à la sortie de signal d'écriture EC, d'autre part à une porte P94 de type ET qui est reliée à la sortie de bit de séquencement s7 du décodeur DEC4 et qui reçoit également le signal complémentaire d'horloge $\overline{W}$.

L'adressage de la mémoire de décalage M9 s'effectue via un multiplexeur MX16 contrôlé par une porte P98 de type OU dont les entrées sont respectivement reliées aux sorties de bit s5 et s7 du décodeur DEC4 et par la sortie de bit C2 du compteur CR7. Les entrées d'adresse du multiplexeur MX16 forment quatre groupes E1 à E4 qui reçoivent respectivement :

des bits d'adressage Ai et le signal de lecture LEC émanant du microprocesseur mP2 via le décodeur DEC5, lorsque le bit C2 a une valeur zéro, pour deux groupes recevant des bits d'adressage Ai différents,

un adressage par les bits a1 à a5 de mémoire de commande MC et une validation cablée sur deux entrées lorsque le bit C2 a une valeur zéro et les bits s5 et s7 ont une valeur zéro,

un adressage par les bits C3 à C7 du compteur CR7 et une validation via une porte P7 de type OU par le bit de sortie s7 du décodeur DEC4 complémenté par un inverseur I21 ou par le bit f5 de commande de chargement de mémoire d'état de voie M8 tel que fourni par la bascule B18 lorsque le bit C2 a une valeur zéro et que l'un des bits s5 ou s7 a une valeur un.

Le déroulement d'un cycle de brasseur BR est le suivant, au cours d'une première partie de cycle pour laquelle le bit C2 a une valeur zéro.

La mémoire de commande MC et la mémoire de décalage M9 sont adressées par le microprocesseur mP2 qui en effectue le contrôle, met à jour la mémoire de commande et traite éventuellement la demande d'interruption IN6,

La mémoire de brassage MT est chargée à partir de l'octet contenu dans le registre d'entrée RD8, les deux quartets composant cet octet étant chargés en registre RE13 lorsque le bit s1 est à un et fournis successivement à la mémoire de brassage lorsque le bit s2 puis le bit s3 sont de valeur un.

Au cours d'une seconde partie du cycle il y a

une analyse du verrouillage de multitrame lorsque le bit s5 est au niveau un, et chargement du registre RE17 et éventuelement des bascules B18 et B19,

un brassage du quartet dit de poids fort, lorsque le bit s6 est à un ; la mémoire d'état de voie M8 fonctionne alors en additionneur, le bit C1 de valeur zéro entraîne l'adressage d'un ordre de brassage du quartet de poids fort par la mémoire de commande MC, le décalage lu en mémoire M8 est chargé dans le registre RE16 ; la mémoire de brassage MT est lue à une adresse composée du numéro de voie et du numéro de quartet fournis respectivement par les bits a1 à a5 et le bit a0 en sortie de mémoire de commande MC, ainsi que par le numéro de trame fourni par le registre RE16,

un chargement du quartet dans le registre RE14,

un brassage du second quartet dit de poids faible lorsque le bit s7 est à un, l'adressage d'un ordre de brassage de quartet de poids faible par la mémoire de commande MC lorsque le bit C1 est de valeur zéro et la succession des opérations décrites ci-dessus jusqu'à chargement du quartet de poids faible dans le registre RE15,

un chargement dans le registre d'émission RD9 des quartets contenus dans les registres RE14 et R16 lorsque le bit s8 est au niveau un et l'émission de l'octet sur la liaison interne sortante LIS.

Après chargement du registre RE16, la mémoire de décalage M9 est chargée à partir du registre RE17 à l'adresse du numéro de voie indiqué par les bits C3 à C7 du compteur CR7.

Le contrôle de bon fonctionnement du brasseur BR est effectué par le microprocesseur mP2 d'une part grâce à la relecture de la mémoire de commande MC et de la mémoire de décalage M9 d'autre part par utilisation du circuit de contrôle CRB (figure 3) de type passif qui vérifie le contenu d'une multitrame complète avant et après brassage. Et ce but le circuit de contrôle CRB comporte une mémoire non figurée pour enregistrer deux multitrames, l'une reçue via les liaisons temporelles entrantes LTE1 à LTE4 et l'autre émise via les liaisons temporelles sortantes LTS1 à LTS4 qui ont accès à la matrice temporelle CX2 de l'unité de brassage UTB comportant le brasseur BR.

A chaque impulsion d'horloge W, les informations captées sur ces huit liaisons sont mémorisées de manière à pouvoir être lue par le microprocesseur mP2 de l'unité de brassage via le bus de données BD2 et sous le contrôle des ordres et des adresses fournies par le microprocesseur mP2 via les bus de commande BK2 et d'adresse BA2.

**Revendications**

1. Autocommutateur temporel qui comporte des unités de commande (UC) à microprocesseur, et des unités de terminaux (UT) à microprocesseur et un réseau de connexion (RCX), les unités de commande et de terminaux étant reliées au réseau de connexion par des liaisons multiplex bidirectionnelles (MU) assurant la mise en communication des unités de terminaux d'une part entre elles pour l'établissement des communications d'autre part avec les unités de commande qui les pilotent, lesdites unités de terminaux (UT) comprenant des unités de terminaux (UTI) de circuits numériques (CN) desservant des jonctions temporelles MIC, caractérisé en ce qu'il comporte des moyens de traitement de signalisation voie par voie pour la desserte des voies de communication téléphoniques tant en mode appel par appel qu'en mode réservé comprenant :

au moins une unité terminale de brassage (UTB) recevant les voies de signalisation associées aux voies de communication réservées qui proviennent des jonctions temporelles MIC et assurant le brassage de ces voies de signalisation et leur réémission vers les jonctions temporelles MIC destinataires via le réseau de connexion (RCX),

des unités de terminaux (UTI) de circuits numériques (CN) comportant chacune dans chaque circuit numérique (CN) un terminal numérique (TN) qui assure le transcodage et la resynchronisation de trame pour le circuit numérique (CN), un circuit de réception de signalisation (SIG) pour la signalisation voie par voie issue de la jonction temporelle MIC desservie par le circuit numérique (CN), ainsi qu'un circuit de synchronisation et de signalisation (SES) pour le contrôle parallèle des synchronisations de multitrames émanant de l'unité terminale de brassage ou de la jonction temporelle MIC desservie par le circuit numérique (CN) et pour l'émission des signalisations relatives aux voies transmises via l'unité de brassage (UTB) vers la jonction temporelle MIC desservie par le circuit numérique.

2. Autocommutateur temporel selon la revendication 1, dans lequel les unités de terminaux (UT) comportent chacune une matrice temporelle (CX) reliant l'unité au réseau de connexion (RCX) de l'autocommutateur par des liaisons multiplex bidirectionnelles (MU) caractérisé en ce que chaque unité terminale (UTI) de circuit numérique (CN) comporte des liaisons multiplex entrantes (LTE) et des liaisons multiplex sortantes (LTS) reliant la matrice temporelle (CX1) de l'unité au terminal numérique (TN), au circuit de réception de signalisation (SIG), au circuit de synchronisation et de signalisation (SES) ainsi qu'à un émetteur récepteur (ER1) du microprocesseur (mP1) de l'unité, la matrice (CX1) établissant à des fins de signalisation par ordre du microprocesseur (mP1) les connexions de ces circuits entre eux et avec les liaisons multiplex (MU) reliées au réseau de connexion (RCX).

3. Autocommutateur temporel selon la revendication 1, caractérisé par le fait que l'unité terminale de brassage (UTB) comporte une matrice temporelle (CX2) reliant l'unité au réseau de connexion (RCX) par des liaisons multiplex bidirectionnelles (MU) et un brasseur (BR) relié à la matrice temporelle (CX2) par une liaison multiplex interne entrante (LIE) et une liaison multiplex sortante (LIS) pour brasser les voies de signalisation correspondant aux voies réservées qu'il reçoit des unités de terminaux (UTI) émettrices via le réseau de connexion (RCX) et la liaison multiplex entrante (LIE) et les retransmettre après brassage vers les unités de terminaux (UTI) réceptrices via la liaison multiplex interne sortante (LIS) et le réseau de connexion (RCX).

4. Autocommutateur temporel selon la revendication 2, caractérisé en ce que le circuit de synchronisation et de signalisation (SES) comporte un dispositif d'analyse de synchronisation de multitrame (SM) permettant l'analyse successive des multitrames pour les deux modes de desserte des voies, ce dispositif étant essentiellement composé :

d'un registre de signalisation (RD4) à décalage connecté en aval d'une liaison multiplex entrante (LTE5) transmettant les octets de signalisation reçus des moyens de brassage et de la jonction temporelle MIC desservie par le circuit numérique (CN) qui le comporte,

d'une mémoire morte de verrouillage (M1) dont les entrées d'adressage sont reliées aux sorties parallèles de deux registres d'état (RE5, RE6) respectivement affectés aux signaux émanant de la jonction temporelle MIC desservie et aux signaux provenant des moyens de brassage, ces registres étant respectivement reliés en parallèle en sortie de mémoire de verrouillage (M1),

d'une série de bascules d'information (B11 à B12) reliées par leurs entrées en sortie de mémoire de verrouillage et par leurs sorties au microprocesseur (mP1) de l'unité de terminaux (UTI) qui les comporte.

5. Autocommutateur temporel selon la revendication 3, caractérisé en ce que le circuit de synchronisation et de signalisation (SES) comporte un circuit d'émission de signalisation (ES) constitué d'une mémoire vive d'envoi d'ordres (M2) relié par ses sorties à un décompteur (DES) et à un registre (RES) dont les sorties sont rebouclées en entrée de données de la mémoire d'envoi (M2), qui est également reliée, en entrée, au microprocesseur (mP1) et à un registre de réception (RD5) connecté en amont d'une liaison multiplex entrante (LTE5) pour recevoir les émissions de l'unité de brassage (UTB), le registre (RES) étant relié par ses sorties au microprocesseur (mP1) et à un registre d'émission (RE7) relié via une liaison multiplex sortante (LTS5) à la matrice temporelle (CX1) de l'unité de terminaux qui le comporte.

6. Autocommutateur temporel selon la revendication 2, caractérisé en ce que le brasseur (BR) comporte une mémoire de commande (MC) contenant les ordres de brassage émis par le microprocesseur (mP2) de l'unité de brassage (UTB) qui le comporte, un automate (AUT) effectuant la détection du signal de verrouillage multitrame (VMT) pour chaque voie transmise par la liaison multiplex entrante (LIE), un circuit (CDM) de mémorisation du décalage de trame (DT) entre un signal de verrouillage de multitrame (VMT) et un signal de référence (SMT), un additionneur (AD) recevant en entrée un numéro de trame lu en mémoire de commande (MC) et le décalage (DT), une mémoire de brassage (MT) associée à un circuit de conversion série-parallèle (CSP) en entrée et un circuit de conversion parallèle-série (CPS) en sortie entre la liaison multiplex entrante (LIE) et la liaison multiplex sortante (LIS), ladite mémoire de brassage (MT) étant adressée en lecture par un séquenceur (SQ) et en écriture par la mémoire de commande (MC) et par l'additionneur (AD).

16

7. Autocommutateur temporel selon la revendication 5, caractérisé en ce que l'accès en mémoire de brassage (MT) s'effectue par quartet par l'intermédiaire de deux portes (P73, P74) de type ET et en ce qu'un circuit d'injection (INJ) inséré en amont du convertisseur parallèle-série (CPS) assure la constitution d'une multitrame sur la liaison multiplex sortante (LIS) à partir des quartets lus en mémoire de brassage (MT) et des ordres de la mémoire de commande (MC) concernant les codes à émettre et l'état des voies qui sont appliqués à une mémoire morte (M6) dont la sortie alimente le convertisseur parallèle-série (CPS).

8. Autocommutateur temporel selon la revendication 2, caractérisé par le fait que l'aiguillage d'une voie réservée reçue en entrée d'un circuit numérique (CN) en vue de sa sortie par l'intermédiaire d'un autre circuit numérique (CN) sous le contrôle d'au moins une unité de commande (UC) implique,

l'aiguillage de la voie de signalisation, associée à la voie réservée reçus d'une jonction temporelle MIC, par la matrice temporelle (CX1), associée au circuit numérique (CN) desservant la jonction dans l'unité terminale (UTI) qui les comporte, et vers une voie de l'une des liaisons multiplex (LTE) reliant la matrice (CX1) au réseau de connexion (RCX),

l'établissement de deux connexions semi-permanentes dans le réseau de connexion (RCX) l'une pour la voie réservée et l'autre pour la voie de signalisation transmise via la liaison multiplex (LTE) déjà considérée, cette autre connexion semi-permanente assurant le transfert de la signalisation vers l'unité de brassage (UTB) par une voie d'une liaison multiplex (LTS),

l'établissement d'un chemin analogue à celui décrit ci-dessus entre l'unité de brassage (UTB) et le circuit numérique (CN) auquel est reliée la jonction temporelle (MIC) destinataire.

## Claims

1. A time division automatic exchange system comprising a control unit (UC) with microprocessor, and terminal units (UT) with microprocessor, and a switching network (RCX), the control units and terminal units being connected to the switching network via bidirectional multiplex links (MU) ensuring the intercommunication between the terminal units on the one hand for the establishment of speech channels, and the communication on the other hand with the control units controlling them, these terminal units (UT) including terminal units (UTI) of digital circuits (CN) to serve PCM time multiplex junctions, characterized in that it comprises means for processing the signalisation channel by channel for serving telephone communication channels either in the call-by-call mode or in the reserved mode, the system comprising :

at least one terminal handling unit (UTB) receiving the signalisation channels associated to the reserved communication channels originating from PCM time multiplex junctions and ensuring the handling of these signalisation channels and their retransmission towards the PCM time multiplex destination junctions via the switching network (RCX),

terminal units (UTI) of digital circuits (CN) each comprising in each digital circuit (CN) a digital terminal (TN) ensuring the transcoding and the frame resynchronization for the digital circuit (CN), a signalisation reception circuit (SIG) for the signalisation channel-by-channel issued by the PCM time multiplex junction served by the digital circuit (CN), as well as a synchronisation and signalisation circuit (SES) for parallelly controlling the multiframe synchronisations coming from the terminal handling unit or from the PCM time multiplex junction served by the digital circuit (CN), and for the transmission of the signalisations relating to the channels transmitted via the handling unit (UTB) towards the PCM time multiplex junction served by the digital circuit.

2. A time division automatic exchange system according to claim 1, in which each terminal unit (UT) comprises a time division matrix (CX) connecting the unit to the switching network (RCX) of the exchange system by bidirectional multiplex links (MU), characterized in that each terminal unit (UTI) of a digital circuit (CN) includes incoming multiplex links (LTE) and outgoing multiplex links (LTS) connecting the time division matrix (CX1) of the unit to the digital terminal (TN), to the signalisation rception circuit (SIG), to the synchronisation and signalisation circuit (SES) as well as to a transmitter-receiver (RE1) of the microprocessor (mP1) of the unit, the matrix (CX1) establishing, for signalisation reasons and commanded by the microprocessor (mP1), the interconnections of the circuits and the connections with the multiplex links (MU) coupled to the switching network (RCX).

3. A time division automatic exchange system according to claim 1, characterized in that the terminal handling unit (UTB) comprises a time division matrix (CX2) connecting the unit to the switching network (RCX) via bidirectional multiplex links (MU), and a handler (BR) connected to the time division matrix (CX2) via an inner incoming multiplex link (LIE) and an outgoing multiplex link (LIS) in order to handle the signalisation channels corresponding to the reserved channels received from the terminal units (UTI) which transmit via the switching network (RCX) and the incoming multiplex link (LIE), and in order to retransmit them after handling towards the terminal units (UTI) which receive via the inner outgoing multiplex links (LIS) and the switching network (RCX).

4. A time division automatic exchange system according to claim 2, characterized in that the synchronisation and signalisation circuit (SES) comprises a multiframe synchronisation analysis device (SM) conceived to successively analyse the multiframes for the two operational modes of these channels,

0 111 792

this device being substantially composed of :

a signalisation shift register (RD4) connected downstream of an incoming multiplex link (LTE5) transmitting the signalisation octetts received from the handling means and from the PCM time multiplex junctions served by the digital circuit (CN) including it,

a read-only locking memory (M1), the address inputs of which are connected to the parallel outputs of two state registers (RE5, RE6) associated respectively to the signals coming from the served PCM time multiplex junction and to the signals coming from the handling means, these registers being respectively connected in parallel to the output of the locking memory (M1),

a series of information flip-flops (B11 to B12), the inputs of which are connected to the output of the locking memory and the outputs are connected to the microprocessor (mP1) of the terminal unit (UIT) including them.

5. A time division automatic exchange system according to claim 3, characterized in that the synchronisation and signalisation circuit (SES) comprises a signalisation transmitting circuit (ES) for sending commands (M2), connected by its outputs to a decrementing counter (DES) and to a register (RES), the outputs of which are looped back to the data inputs of the memory (M2), this memory being further connected to the input of the microprocessor (mP1) and to a reception register (RD5) inserted upstream of an incoming multiplex link (LTE5), for receiving the messages from the handling unit (UTB), the outputs of the register (RES) being connected to the microprocessor (mP1) and to a transmission register (RE7) connected via an outgoing multiplex link (LTS5) to the time multiplex matrix (CX1) of the terminal unit including it.

6. A time division automatic exchange system according to claim 2, characterized in that the handler (BR) comprises a control memory (MC) containing the handling commands transmitted by the microprocessor (mP2) of the handling unit (UTB) including it, an automatic device (AUT) performing the detection of the multiframe locking signal (VMT) for each channel transmitted by the incoming multiplex link (LIE), a circuit (CDM) for memorizing the frame shift (DT) between a multiframe locking signal (VMT) and a reference signal (SMT), an adder (AD) receiving via its inputs a frame number read from the control memory (MC) and the shift (DT), a handling memory (MT) associated to a series-parallel conversion circuit (CSP) at the input and to a parallel-series conversion circuit (CPS) at he output between the incoming multiplex link (LIE) and the outgoing multiplex link (LIS), the handling memory (MT) being addressed for reading purposes by a sequencer (SQ) and for writing purposes by the control memory (MC) and by the adder (AD).

7. A time division automatic exchange system according to claim 5, characterized in that the access to the handling memory (MT) is performed by a quartett via two and-gates (P73, P74), and that an injection circuit (INJ) inserted upstream of the parallel-series converter (CPS) ensures the constitution of a multiframe on the outgoing multiplex link (LIS), on the basis of the quartett read from the handling memory (MT) and of the command coming from the control memory (MC) concerning the codes to be transmitted and the state of the channels, the command being applied to a read-only memory (M6), the output of which supplies the parallel-series converter (CPS).

8. A time division automatic exchange system according to claim 2, characterized in that the branching of a reserved channel received at the input of a digital circuit (CN) towards its output through another digital circuit (CN) under the control of at least one control unit (UC) implies :

the branching of the signalisation channel associated to the reserved channel received from a PCM time multiplex junction, via the time division matrix (CX1) associated to the digital circuit serving the junction in the terminal unit (UTI) including it, and towards a channel of one of the multiplex links (LTE) connecting the matrix (CX1) to the switching network (RCX),

the establishment of two half-permanent connections in the switching network (RCX), one for the reserved channel and the other for the signalisation channel via the multiplex link (LTE) considered above, this other half-permanent connection ensuring the transfer of the signalisation towards the handling unit (UTB) via a channel of a multiplex link (LTS),

the establishment of a path similar to that described above between the handling unit (UTB) and the digital circuit (CN) to which the PCM time multiplex destination junction is connected.


**Patentansprüche**

1. Zeitmultiplex-Selbstwählanlage mit mikroprozessorgestützten Steuereinheiten (UC) und mikroprozessorgestützten Terminaleinheiten (UT) sowie einem Vermittlungsnetz (RCX), wobei die Steuereinheiten und Terminaleinheiten über bidirektionale Multiplexverbindungen (MU) an das Vermittlungsnetz angeschlossen sind, das die Terminaleinheiten einerseits untereinander zur Herstellung der Verkehrswege und andererseits mit den Steuereinheiten in Verbindung bringt, die sie steuern, und wobei die Terminaleinheiten (UT) Terminaleinheiten (UTI) digitaler Kreise (CN) enthalten, die PCM-Zeitmultiplexanschlüsse bedienen, dadurch gekennzeichnet, daß die Anlage Mittel zur Verarbeitung der Signalisation Kanal für Kanal zur Bedienung der Fernsprechkanäle sowohl im Ruf-auf-Ruf-Modus als auch im reservierten Modus aufweisen, die enthalten :

mindestens eine Abtastendeinheit (UTB), die die den reservierten Nachrichtenkanälen, die von den

18

PCM-Zeitmultiplexanschlüssen kommen, zugeordneten Signalisationskanäle empfängt und die Abtastung dieser Signalisationskanäle und ihre Weiterleitung zu den PCM-Zeitmultiplex-Zielanschlüssen über das Vermittlungsnetz (RCX) sicherstellt,

Terminaleinheiten (UTI) von Digitalkreisen (CN), die je in jedem Digitalkreis (CN) ein digitales Terminal (TN) aufweisen, das die Umkodierung und die erneute Rahmensynchronisierung für die Digitalkreise (CN) bewirkt, einen Signalisationsempfangskreis (SIG) für die von dem von dem PCM-Zeitmultiplexanschluß, der vom Digitalkreis (CN) bedient wird, kommende Signalisation Kanal auf Kanal, sowie einen Synchronisations- und Signalisationskreis (SES) für die parallele Kontrolle der Überrahmensynchronisationen, die von der Abtastendeinheit oder dem von dem Digitalkreis (CN) bedienten PCM-Zeitmultiplexanschluß ausgehen, und für die Aussendung der sich auf diejenigen Kanäle beziehenden Signalisierungen, die über die Abtasteinheit (UTB) an die vom Digitalkreis bedienten PCM-Zeitmultiplexanschlüsse übertragen werden.

2. Zeitmultiplex-Selbstwählanlage nach Anspruch 1, in der die Terminaleinheiten (UT) je eine Zeitmultiplexmatrix (CX) enthalten, die die Einheit an das Vermittlungsnetz (RCX) der Selbstwählanlage über bidirektionale Multiplexverbindungen (MU) anschließen, dadurch gekennzeichnet, daß jede Terminaleinheit (UTI) digitaler Kreise (CN) ankommende Multiplexverbindungen (LTE) und abgehende Multiplexverbindungen (LTS) aufweist, die die Zeitmultiplexmatrix (CX1) der digitalen Terminaleinheit (TN) mit dem Signalisationsempfangskreis (SIG), dem Synchronisations- und Signalisationskreis (SES) sowie einem Sender-Empfänger (ER1) des Mikroprozessors (mP1) der Einheit verbindet, wobei die Matrix (CX1) zum Zweck der Signalisierung aufgrund eines Befehls vom Mikroprozessor (mP1) die Anschlüsse dieser Kreise untereinander und mit den Multiplexverbindungen (MU) herstellt, die an das Vermittlungsnetz (RCX) angeschlossen sind.

3. Zeitmultiplex-Selbstwählanlage nach Anspruch 1, dadurch gekennzeichnet, daß die Abtastendeinheit (UTB) eine Zeitmultiplexmatrix (CX2), die die Einheit über bidirektionale Multiplexverbindungen (MU) an das Vermittlungsnetz (RCX) anschließt, und einen Abtaster (BR) enthält, der an die Zeitmultiplexmatrix (CX2) über eine ankommende interne Multiplexverbindung (LIE) und eine ausgehende Multiplexverbindung (LIS) angeschlossen ist, um die den reservierten Kanälen entsprechenden Signalisationskanäle abzutasten, die er von den sendenden Terminaleinheiten (UTI) über das Vermittlungsnetz (RCX) und die ankommende Multiplexverbindung (LIE) empfängt, und um sie nach der Abtastung wieder in Richtung auf die empfangenden Terminaleinheiten (UTI) über die interne ausgehende Multiplexverbindung (LIS) und das Vermittlungsnetz (CX) weiter zu übertragen.

4. Zeitmultiplex-Vermittlungsanlage nach Anspruch 2, dadurch gekennzeichnet, daß der Synchronisations- und Signalisationskreis (SES) eine Vorrichtung zur Analyse der Synchronisation des Überrahmens (SM) aufweist, die die aufeinanderfolgende Analyse der Überrahmen für die beiden Bedienungsarten dieser Kanäle ermöglicht, wobei diese Vorrichtung im wesentlichen besteht aus :

einem Signalisationsschieberegister (RD4), das hinter einer ankommenden Multiplexverbindung (LTE5) eingefügt ist, die die von den Abtastmitteln und dem PCM-Zeitmultiplexanschluß, der von dem dieses Register enthaltenden Digitalkreis (CN) bedient wird, empfangenen Signalisationsoktette überträgt,

einem Verriegelungsfestwertspeicher (M1), dessen Adresseneingänge an die parallelen Ausgänge zweier Zustandsregister (RE5, RE6) angeschlossen sind, die den von dem bedienten PCM-Zeitmultiplexanschluß kommenden Signalen bzw. den von den Abtastmitteln kommenden Signalen zugeordnet sind und parallel an den Ausgang des Verriegelungsspeichers (M1) angeschlossen sind,

eine Serie von Informationskippstufen (B11 bis B12), die mit ihren Eingängen an den Ausgang des Verriegelungsspeichers und mit ihren Ausgängen an den Mikroprozessor (mP1) der sie enthaltenden Terminaleinheit (UTI) angeschlossen sind.

5. Zeitmultiplex-Selbstwählanlage nach Anspruch 3, dadurch gekennzeichnet, daß der Synchronisations- und Signalisationskreis (SES) einen Signalisationssendekreis (ES) aufweist, der aus einem Aktivspeicher zum Aussenden von Befehlen (M2) besteht und mit seinen Ausgängen an einen Rückwärtszähler (DES) und an ein Register (RES) angeschlossen ist, dessen Ausgänge an den Dateneingang des Sendespeichers (M2) zurückgeschleift sind, wobei dieser Speicher auch an den Eingang eines Mikroprozessors (mP1) und an ein Empfangsregister (RD5) angeschlossen ist, das vor einer ankommenden Multiplexverbindung (LTE5) liegt, um die von der eigenen Abtasteinheit (UTB) ausgesandten Signale zu empfangen, wobei das Register (RES) mit seinen Ausgängen an den Mikroprozessor und an ein Senderegister (RE7) angeschlossen ist, das über eine ausgehende Multiplexverbindung (LTS5) an die Zeitmultiplexmatrix (CX1) der sie enthaltenden Terminaleinheit angeschlossen ist.

6. Zeitmultiplex-Selbstwählanlage nach Anspruch 2, dadurch gekennzeichnet, daß der Abtaster (BR) einen Steuerspeicher (MC), der die vom Mikroprozessor (mP2) der ihn enthaltenden Abtasteinheit (UTB) ausgesandten Abtastbefehle enthält, einen Automaten (AUT), der die Erfassung des Überrahmenverriegelungssignals (VMT) für jeden über die ankommende Multiplexverbindung (LIE) übertragenen Kanal vornimmt, einen Speicherkreis (CDM) für die Rahmenverschiebung (DT) zwischen einem Überrahmenverriegelungssignal und einem Bezugssignal (SMT), einen Addierer (AD), der am Eingang eine aus dem Steuerspeicher (MC) ausgelesene Rahmennummer und die Verschiebung (DT) zugeführt erhält, und einen Abtastspeicher (MT) aufweist, der einem Serien-Parallel-Wandlerkreis (CSP) am Eingang und einem Parallel-Serie-Wandlerkreis (CPS) am Ausgang zwischen der ankommenden Multiplexverbindung (LIE) und der ausgehenden Multiplexverbindung (LIS) zugeordnet ist, wobei der Abtastspeicher (MT) für den Lesevorgang von einer Folgeschaltung (SQ) und für den Schreibvorgang vom Steuerspeicher (MC) und vom Addierer (AD) adressiert wird.

7. Zeitmultiplex-Selbstwählanlage nach Anspruch 5, dadurch gekennzeichnet, daß der Zugriff zum Abtastspeicher (MT) quartettweise über zwei Und-Tore (P73, P74) erfolgt und daß ein Einspeisekreis (INJ), der vor dem Parallel-Serie-Wandler (CPS) eingefügt ist, den Aufbau eines Überrahmens auf der ausgehenden Multiplexverbindung (LIS) ausgehend von den aus dem Abtastspeicher (MT) gelesenen Quartett und den vom Steuerspeicher (MC) kommenden Befehlen betreffend die auszusendenden Kodes und den Kanalzustand bewirkt, wobei diese Befehle an einen Festwertspeicher (M6) angelegt werden, dessen Ausgang den Parallel-Serien-Wandler (CPS) speist.

8. Zeitmultiplex-Selbstwählanlage nach Anspruch 2, dadurch gekennzeichnet, daß die Führung eines reservierten Kanals, der am Eingang eines digitalen Kreises (CN) empfangen wurde, bis zu seinem Ausgang über einen anderen Digitalkreis (CN) unter der Kontrolle durch mindestens eine Steuereinheit (UC) einschließt :

die Führung des Signalisationskanals, der dem von einem PCM-Zeitmultiplexanschluß empfangenen reservierten Kanal zugeordnet ist, über die Zeitmultiplexmatrix (CX1), die dem den Anschluß in der sie enthaltenden Terminaleinheit (UTI1) bedienenden Digitalkreis (CN) zugeordnet ist, und in Richtung auf einen Kanal einer der Multiplexverbindungen (LTE), die die Matrix (CX1) mit dem Vermittlungsnetz (RCX) verbindet,

den Aufbau zweier halbpermanenter Verbindungen im Vermittlungsnetz (RCX), die eine für den reservierten Kanal und die andere für den über die bereits betrachtete Multiplexverbindung (LTE) übertragenen Signalisationskanal, wobei diese andere halbpermanente Verbindung den Übergang der Signalisation auf die Abtasteinheit (UTB) über einen Kanal einer Multiplexverbindung (LTS) bewirkt,

den Aufbau eines entsprechenden Wegs wie oben beschrieben zwischen der Abtasteinheit (UTB) und dem Digitalkreis (CN), an den der PCM-Zeitmultiplex-Zielanschluß angeschlossen ist.

FIG.1

FIG.2

FIG.3

FIG.4A

0 111 792

FIG.4B

0 111 792

**FIG.5A**

0 111 792

6

# FIG.5B

FIG.6

FIG.7A

# FIG.7B